(19) Europäisches Patentamt
European Patent Office
Office européen des brevets

(11) EP 4 678 344 A1

(12) **EUROPEAN PATENT APPLICATION**
published in accordance with Art. 153(4) EPC

(43) Date of publication:
**14.01.2026 Bulletin 2026/03**

(21) Application number: 23929935.7

(22) Date of filing: 08.11.2023

(51) International Patent Classification (IPC):
*B25J 9/16* (2006.01)

(52) Cooperative Patent Classification (CPC):
**B25J 9/1679; B25J 9/16; B25J 9/1612;
B25J 9/1633; B25J 9/1635; B25J 9/1669;
B25J 9/1697; B25J 18/04**

(86) International application number:
**PCT/CN2023/130371**

(87) International publication number:
**WO 2024/198365 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.03.2023 CN 202310360170**

(71) Applicant: **Tencent Technology (Shenzhen)
Company Limited
Shenzhen, Guangdong, 518057 (CN)**

(72) Inventors:
• **WANG, Shuai
Shenzhen, Guangdong 518057 (CN)**
• **ZHENG, Yu
Shenzhen, Guangdong 518057 (CN)**

(74) Representative: **EP&C
P.O. Box 3241
2280 GE Rijswijk (NL)**

(54) **ROBOTIC ARM CONTROL METHOD AND APPARATUS, DEVICE, AND STORAGE MEDIUM**

(57) The present application belongs to the field of robots. Disclosed are a robotic arm control method and apparatus, a device, and a storage medium. The method is executed by a controller of a robotic arm. A three-dimensional object is placed at any position other than a tail end on the robotic arm. The method comprises: controlling the robotic arm to throw the three-dimensional object (510); acquiring a first control signal; controlling, on the basis of the first control signal, the robotic arm to catch the thrown three-dimensional object, with the position where the robotic arm catches the three-dimensional object being any position other than the tail end (520); acquiring a second control signal; and controlling the robotic arm on the basis of the second control signal, so that the three-dimensional object regains a state of force balance at any position other than the tail end (530). The present application provides a new use method for a robotic arm, comprising first throwing a three-dimensional object, then catching the three-dimensional object by means of any position other than the tail end on the robotic arm, and enabling the three-dimensional object to regain balance. The control mode of the robotic arm for throwing and catching the three-dimensional object is expanded.

FIG. 4

**Description**

RELATED APPLICATION

This application claims priority to Chinese Patent Application No. 202310360170.X, filed on March 31, 2023 and entitled "ROBOTIC ARM CONTROL METHOD AND APPARATUS, DEVICE, AND STORAGE MEDIUM".

FIELD OF THE TECHNOLOGY

This application relates to the field of robots, and in particular, to a robotic arm control method and apparatus, a device, and a storage medium.

BACKGROUND OF THE DISCLOSURE

With the development of robotics and expansion of applicable fields, robots have gradually become irreplaceable tools in fields of production, service, and the like. A robotic arm is a common actuator of the robot, and plays an important role in production and life.

In the related art, an end of the robotic arm is usually used to complete an operation task. Alternatively, an end effector is mounted at the end of the robotic arm to complete a corresponding operation. For example, a robotic finger is mounted at the end of the robotic arm, and an operation is completed by controlling motions of the robotic arm and the robotic finger.

SUMMARY

This application provides a robotic arm control method and apparatus, a device, and a storage medium. The technical solutions are as follows.

In an aspect of this application, a robotic arm control method is provided. The method is performed by a controller of a robotic arm. The method includes:

controlling the robotic arm to throw an object placed on the robotic arm;

acquiring a first control signal;

controlling, based on the first control signal, the robotic arm to receive the thrown object;

acquiring a second control signal; and

controlling, based on the second control signal, the robotic arm to cause the object to be in a force balance state on the robotic arm.

In another aspect of this application, a robotic arm control apparatus is provided. The apparatus includes:

a control module, configured to control the robotic arm to throw an object placed on the robotic arm; and

an acquisition module, configured to acquire a first control signal,

the control module being further configured to control, based on the first control signal, the robotic arm to receive the thrown object;

the acquisition module being further configured to acquire a second control signal; and

the control module being further configured to control, based on the second control signal, the robotic arm to cause the object to be in a force balance state on the robotic arm.

In an aspect of this application, a computer-readable storage medium is provided. The storage medium has a computer program stored therein, and a processor executes the computer program to implement the foregoing robotic arm control method.

In an aspect of this application, a chip is provided. The chip includes a programmable logic circuit and/or program instructions. An electronic device having the chip installed thereon is configured to implement the foregoing robotic arm control method during operation.

In an aspect of this application, a computer program product is provided. The computer program product includes computer instructions. The computer instructions are stored in a computer-readable storage medium, and a processor reads the computer instructions from the computer-readable storage medium and executes the computer instructions to implement the foregoing robotic arm control method.

The technical solutions provided in this application have at least the following beneficial effects: a new method for using a robotic arm is provided. The robotic arm can first throw the object, receive the object, and re-balance the object. The controller controls the robotic arm to implement the action of throwing and receiving the object. Therefore, a method for controlling a robotic arm to throw and receive an object at any position other than an end and maintain the balance of the object is developed.

BRIEF DESCRIPTION OF THE DRAWINGS

FIG. 1 is a schematic diagram of a robotic arm according to an exemplary embodiment of this application.

FIG. 2 is a schematic diagram of a robotic arm according to an exemplary embodiment of this application.

FIG. 3 is a schematic diagram of a robotic arm according to an exemplary embodiment of this application.

FIG. 4 is a flowchart of a robotic arm control method according to an exemplary embodiment of this application.

FIG. 5 is a schematic diagram of a robotic arm according to an exemplary embodiment of this application.

FIG. 6 is a schematic diagram of a robotic arm according to an exemplary embodiment of this application.

FIG. 7 is a flowchart of a robotic arm control method according to an exemplary embodiment of this application.

FIG. 8 is a schematic diagram of a robotic arm and an object according to an exemplary embodiment of this application.

FIG. 9 is a flowchart of a robotic arm control method according to an exemplary embodiment of this application.

FIG. 10 is a flowchart of a robotic arm control method according to an exemplary embodiment of this application.

FIG. 11 is a schematic diagram of a robotic arm and an object according to an exemplary embodiment of this application.

FIG. 12 is a flowchart of a robotic arm control method according to an exemplary embodiment of this application.

FIG. 13 is a flowchart of a robotic arm control method according to an exemplary embodiment of this application.

FIG. 14 is a flowchart of a robotic arm control method according to an exemplary embodiment of this application.

FIG. 15 is a structural block diagram of a robotic arm control apparatus according to an exemplary embodiment of this application.

FIG. 16 is a schematic structural block diagram of a robotic arm according to an exemplary embodiment of this application.

DESCRIPTION OF EMBODIMENTS

A robotic arm is a common actuator of a robot. With wide application of artificial intelligence (AI), the robotic arm plays an important role in production and life, and becomes an essential device.

During use of the robotic arm, an end of the robotic arm is usually used to complete an operation task. Alternatively, an end effector is mounted at the end of the robotic arm to complete a corresponding operation. For example, a robotic finger is mounted at the end of the robotic arm, and an operation is completed by controlling motions of the robotic arm and the robotic finger.

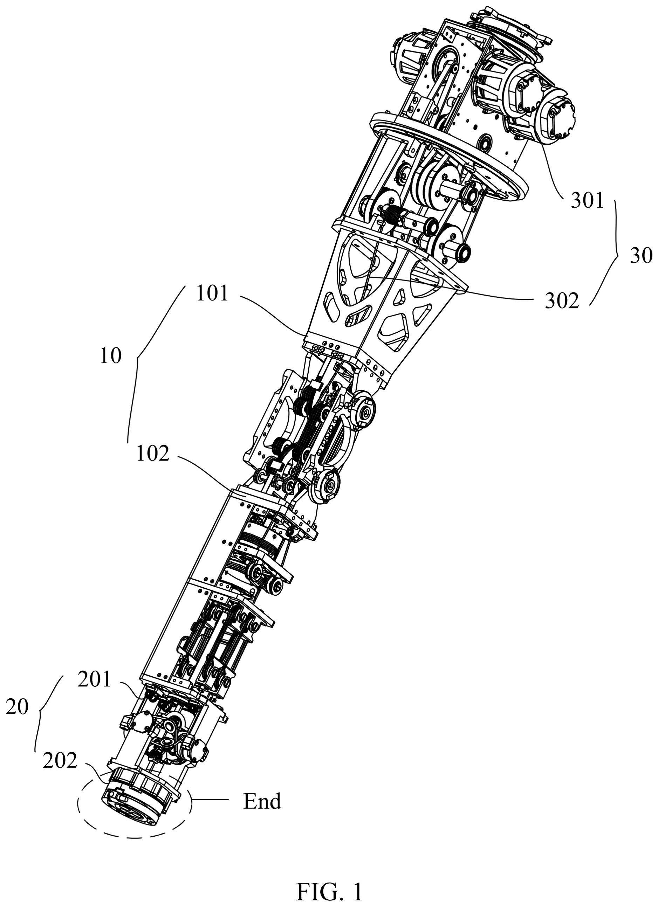

In the related art, a rigid body connecting member and/or a housing of the robotic arm is not considered for completing an operation task, and the main reason is as follows: first, the exterior of the robotic arm is usually curved and does not have a relatively large plane; and second, without a design of a graspable mechanism such as a robotic finger, contact between the exterior of the robotic arm and an external object does not constitute form closure and force closure. Consequently, the robotic arm is difficult to control. FIG. 1 is a schematic diagram of a robotic arm according to an exemplary embodiment of this application.

In the embodiments of the present disclosure including the embodiments of both the claims and the specification (hereinafter referred to as "all embodiments of the present disclosure"), the robotic arm is a robotic arm with 7 degrees of freedom. Elbow and wrist control motors of the robotic arm are arranged in the hollow of a third joint of a back shoulder. In all embodiments of the present disclosure, an elbow and a wrist are driven by cables which are powered by a motor located in a shoulder. The motor drives a cable pulley via a belt, and the cable pulley, driven by the belt, moves cables to control motions of the elbow and the wrist.

Exemplarily, the robotic arm includes: a first robotic part 10, a second robotic part 20, and a drive assembly 30. The first robotic part 10 includes a first fixed member 101 and a first movable member 102 that are in rotational connection by a joint. The second robotic part 20 includes a second fixed member 201 and a second movable member 202 that are in rotational connection by a joint. The second fixed member 201 is connected to the first movable member 102 by a joint.

The drive assembly 30 includes at least two drive sources 301 and at least two drive cables 302. Each of the at least two drive sources 301 is connected to the first fixed member 101, the first movable member 102, and the second movable member 202 through at least one drive cable 302. The at least two drive sources 301 is switched between a first operation mode and a second operation mode.

In the first operation mode, the at least two drive sources 301 can drive the second movable member 202 to rotate relative to the second fixed member 201, and maintain the first movable member 102 in a fixed position relative to the first fixed member 101. In the second operation mode, the at least two drive sources 301 can drive the second movable member 202, the second fixed member 201, and the first movable member 102 to rotate relative to the first fixed member 101, and maintain the second movable member 202 in a fixed position relative to the second fixed member 201.

In this application, the robotic arm includes the first robotic part 10, the second robotic part 20, and the drive assembly 30. The drive assembly 30 includes at least two drive sources 301 and at least two drive cables 302. Each of the at least two drive sources 301 is connected to the first movable member 102 of the first robotic part 10, the second movable member 202 of the second robotic part 20, and the first fixed member 101 of the first robotic part 10 through at least one drive cable 302. In the first operation mode, the at least two drive sources 301 can drive the second movable member 202 to rotate relative to the second fixed member 201, and maintain the first movable member 102 in a fixed position relative to the first fixed member 101. In the second operation mode, the at least two drive sources 301 can drive the second movable member 202, the second fixed member 201, and the first movable member 102 to rotate relative to the first fixed member 101, and maintain the second movable member 202 in a fixed position relative to the second fixed member 201. By implementing coupled driving of the at least two drive sources 301 for a plurality of parts, utilization of the drive sources 301 is improved, structural complexity of the robotic part is reduced, a moment of inertia of the robotic part is increased, and motion performance of the robotic part is enhanced.

In addition, in this embodiment, independent motion of the second robotic part 20 (that is, the second movable member 202 rotates relative to the second fixed member 201, but the position of the first movable member 102 remains fixed relative to the first fixed member 101) and coupled motion of the second robotic part 20 driven by the first robotic part 10 (that is, the second movable member 202, the second fixed member 201, and the first movable member 102 rotate relative to the first fixed member 101, and the position of the second movable member 202 remains fixed relative to the second fixed member 201) are both driven by the at least two drive sources 301. That is, part motion corresponding to each degree of freedom is driven by power of the at least two drive sources 301. Compared with a solution in the related art in which a single degree of freedom is driven by a single drive source 301, coupled driving of the at least two drive sources 301 for a single movable member can be implemented. In this way, at least twice the traction force is achieved, which is beneficial to improving operation performance such as a rotation torque and a rotation velocity of the movable member.

In all embodiments of the present disclosure, the at least two drive sources 301 include a motor and an active cable pulley that are connected through a transmission mechanism. The motor drives, through the transmission mechanism, the active cable pulley to rotate. The drive cable 302 is wrapped around the active cable pulley. When the active cable pulley rotates, the drive cable 302 can be tightly wrapped around the active cable pulley, whereby a traction force is applied to at least one of the first fixed member 101, the first movable member 102, and the second movable member 202 via the drive cable 302. In some possible implementations, the transmission mechanism includes, but is not limited to, a belt transmission mechanism, a gear transmission mechanism, a worm transmission mechanism, and the like.

Exemplarily, the transmission mechanism is a belt transmission, which includes an active belt pulley, a transmission belt, and a passive belt pulley. The active belt pulley is connected to an output axis of the motor, the passive belt pulley is connected to the active cable pulley, and the transmission belt is connected between the active belt pulley and the passive belt pulley.

Exemplarily, the transmission mechanism is a belt transmission, which further includes a tensioning mechanism. The tensioning mechanism is close to the transmission belt and is configured to adjust the tension of the transmission belt.

In all embodiments of the present disclosure, the first operation mode and the second operation mode are different operation modes formed according to different or same rotation directions of the at least two drive sources 301; different operation modes formed according to different or same rotation velocities of the at least two drive sources 301; or different operation modes formed according to different or same rotation directions and rotation velocities of the at least two drive sources 301. In some embodiments, in the first operation mode, the at least two drive sources 301 rotate in a same direction, and in the second operation mode, the at least two drive sources 301 rotate in opposite directions.

Therefore, according to the robotic arm of this embodiment, by controlling the rotation directions of the at least two drive sources 301, independent motion of the second robotic part 20, and coupled motion of the second robotic part 20 driven by the first robotic part 10 can be controlled. The structure is simple, and coupling control efficiency is high. In some embodiments, in the first operation mode, the at least two drive sources 301 rotate in opposite directions, and in the second operation mode, the at least two drive sources 301 rotate in a same direction. In addition, exemplarily, in both the first operation mode and the second operation mode, the rotation velocities and output torques of the at least two drive sources 301 are identical.

Refer to FIG. 1, in all embodiments of the present disclosure, the at least two drive sources 301 are located on a side, facing away from the first movable member 102, of the first fixed member 101, and the at least two drive cable 302 pass through the first fixed member 101 and are connected to the first movable member 102, and pass through the second fixed member 201 and are connected to the second movable member 202. Therefore, according to the robotic arm of all embodiments of the present disclosure, the at least two drive sources 301 are arranged on the side, facing away from the first movable member 102, of the first fixed member 101, and the drive cables 302 pass through the first fixed member 101 and are connected to the first movable member 102, and pass through the second fixed member 201 and are connected to the second movable member 202. The mass of the at least two drive sources 301 is concentrated on the side of the first fixed member 101, and the mass of the at least two drive sources 301 on the side of the first movable member 102, the second fixed member 201, and the second movable member 202 is relatively small, which helps to improve a moment of inertia of the side of the first movable member 102, the second fixed member 201, and the second movable member 202, and improve operation performance of the first movable member 102, the second fixed member 201, and the second movable member 202.

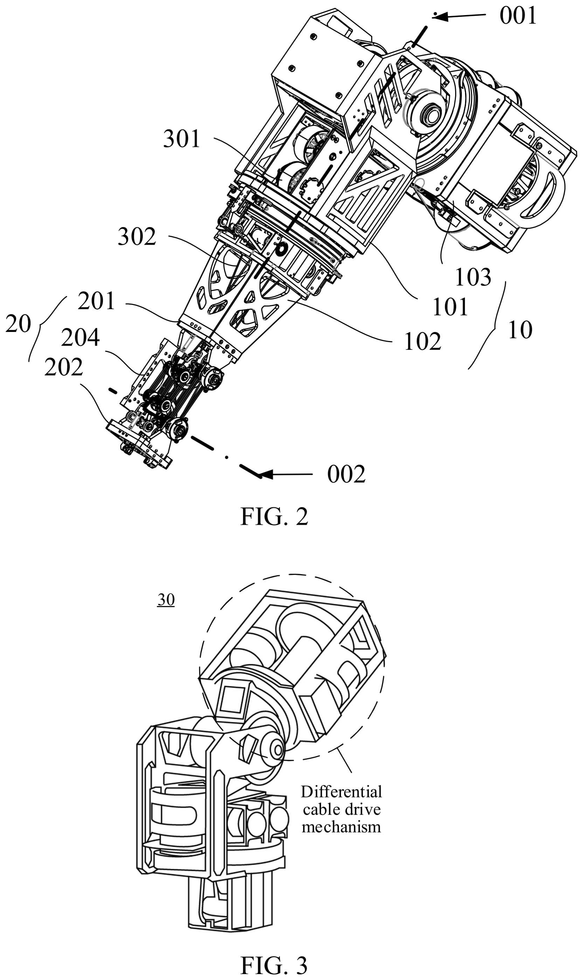

Refer to FIG. 2. In all embodiments of the present disclosure, the first robotic part 10 is a robotic shoulder part, and the second robotic part 20 is a robotic elbow part. The first fixed member 101 and the first movable member 102 are in rotational connection along a first axis 001. The second fixed member 201 and the second movable member 202 are in rotational connection along a second axis 002.

In the first operation mode, the at least two drive sources 301 can drive the second movable member 202 to rotate about the second axis 002 relative to the second fixed member 201, and maintain the first movable member 102 in a fixed position relative to the first fixed member 101. In the second operation mode, the at least two drive sources 301 can drive the second robotic part 20 and the first movable member 102 to rotate about the first axis 001 relative to the first fixed member 101, and maintain the second movable member 202 in a fixed position relative to the second fixed member 201.

In all embodiments of the present disclosure, the first robotic part 10 is a robotic shoulder part, and the second robotic part 20 is a robotic elbow part. In the first operation mode, the at least two drive sources 301 can drive the second movable member 202 of the robotic elbow part to rotate about the second axis 002 relative to the second fixed member 201 of the robotic elbow part, and maintain the first movable member 102 of the robotic shoulder part in a fixed position relative to the first fixed member 101 of the robotic shoulder part, to implement independent motion of the robotic elbow part.

In the second operation mode, the at least two drive sources 301 can drive the first movable member 102 of the robotic shoulder part, which, in turn, drives the entire robotic elbow part (including the second fixed member 201 and the second movable member 202) to rotate about the first axis 001 relative to the first fixed member 101 of the robotic shoulder part, and maintain the second movable member 202 of the robotic elbow part in a fixed position relative to the second fixed member 201 of the robotic elbow part, to implement coupled motion of the robotic elbow part and the robotic shoulder part.

Exemplarily, the robotic arm applies a set of drive sources 301, and the controller can respectively drive the robotic elbow part and the robotic shoulder part by controlling the set of drive sources 301 to operate in different operation modes. Degrees of freedom of both the robotic elbow part and the robotic shoulder part can be traction driven by the at least two drive sources 301. In this way, at least twice the traction force is achieved, which is beneficial to improving operation performance such as rotation torques and rotation velocities of the robotic elbow part and the robotic shoulder part.

In some possible implementations, the robotic arm further includes a robotic wrist part. The robotic shoulder part is connected to the robotic elbow part, and the robotic wrist part is connected to the robotic elbow part, to form a complete robotic arm. In some possible implementations, the at least two drive sources 301 are located in the second movable member 202, are connected to the second movable member 202, and move with the second movable member 202.

Refer to FIG. 2. In all embodiments of the present disclosure, the first axis 001 is perpendicular to and intersects with the second axis 002. Therefore, the first robotic part 10 (such as a robotic shoulder part) can drive the second robotic part 20 (such as a robotic elbow part) to rotate, to simulate forearm rotation motion of an arm of a human body. The second robotic part 20 can rotate in a wide range (such as 0° to 360°) in space, which enriches action scenes of the robotic arm, and improves an application range of the robotic arm. Refer to FIG. 2. In all embodiments of the present disclosure, the first robotic part 10 further includes a third fixed member 103. The first fixed member 101 and the third fixed member 103 are in rotational connection. Therefore, the first robotic part 10 includes the third fixed member 103, the first fixed member 101, and the first movable member 102 that are in rotational connection in sequence. In some possible implementations, the first fixed member 101 is driven, by a shoulder drive assembly, to rotate relative to the second fixed member 201, to simulate lifting motion of a shoulder part of an arm of a human body. The second fixed member 201 is fixedly connected to a torso or another support structure of a robot, and is configured to fixedly support the entire robotic arm.

Refer to FIG. 2. In all embodiments of the present disclosure, the second robotic part 20 further includes a first connecting member 203. The second fixed member 201 and the first connecting member 203 are in rotational connection, and the first connecting member 203 and the second movable member 202 are in rotational connection. Therefore, according to the robotic arm of all embodiments of the present disclosure, the second fixed member 201 and the second movable member 202 in the second robotic part 20 are in rotational connection through the first connecting member 203. In this way, the second axis 002 can be arranged away from the second fixed member 201, and an angle by which the second movable member 202 can rotate relative to the second fixed member 201 is significantly expanded.

According to the robotic arm of all embodiments of the present disclosure, the at least two drive sources 301 include two elbow active cable pulleys that are mounted inside the first movable member 102 and are configured to respectively drive two elbow drive cables 302. The two elbow drive cables 302 are wrapped around the two elbow active cable pulleys, which implements connection between the drive cables 302 and the first movable member 102.

The at least two drive cables 302 include the two elbow drive cables 302. The two elbow drive cables 302 are respectively connected to the first fixed member 101, the first movable member 102, and the second movable member 202, are respectively connected to two positions of the second movable member 202, and are finally connected to the second movable member 202 in opposite wrapping directions.

Refer to FIG. 3. A description is made by using an example in which the first robotic part 10 is a robotic shoulder part. In a low-inertia differential shoulder part structure of a robotic arm with 7 degrees of freedom, a differential cable drive mechanism is applied to a shoulder, which can reduce a weight of the mechanism and implement back arrangement of a motor module, and may further implement torque superposition in some cases. A third degree of freedom of a shoulder part is implemented by a pair of large and small pulley, and transmission is performed in a cable drive manner, whereby transmission precision is further improved and the weight is further reduced. Finally, drive modules of a wrist part and an elbow part are arranged behind a shoulder part upper arm module, whereby a weight of the entire robotic arm is reduced.

Refer to the foregoing content. The end of the robotic arm is usually used to complete an operation task. All embodiments of the present disclosure provide a robotic arm control method. According to the method, a robotic arm can complete a task of throwing and receiving an object with a non-end link, and balance the object at any position on the robotic arm other than an end.

A description is made by using an example in which the object is a bottle. For a robotic arm with a plurality of degrees of freedom, according to the robotic arm control method provided in all embodiments of the present disclosure, the robotic arm throws up an object (such as a bottle) and then receives the thrown three-dimensional in the air with a non-end link (such as a forearm of the robotic arm). The control method provided in all embodiments of the present disclosure may be implemented by the foregoing controller of the robotic arm. The controller may be arranged in the robotic arm, or may be arranged outside the robotic arm and is in wired or wireless connection with the robotic arm, to control motions of the robotic arm.

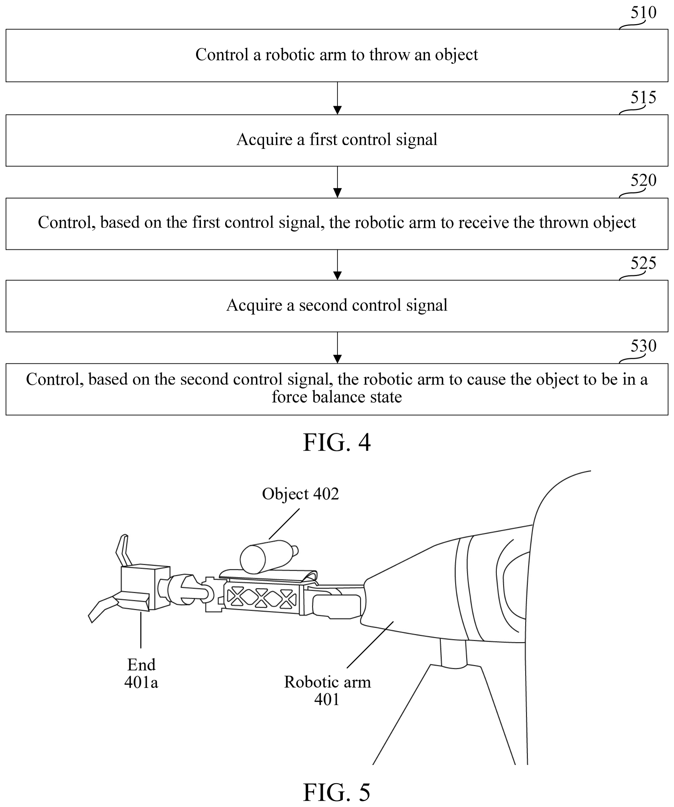

FIG. 4 is a flowchart of a robotic arm control method according to all embodiments of the present disclosure. The method may be performed by a controller of a robotic arm. The robotic arm may include at least one link. For example, the robotic arm includes two links, that is, a forearm and an upper arm. Any adjacent two links are connected by at least one joint. An end of the robotic arm may be an end-effector, for example a gripper, and so on. The method includes the following operations.

**Operation 510:** Control the robotic arm to throw an object placed on the robotic arm.

Exemplarily, before being thrown, the object may be placed at a first position on the robotic arm. In all embodiments of the present disclosure, the first position may be any position on the robotic arm, or a position on the robotic arm other than an end (also be referred to be as an end-effector) of the robotic arm. The action of throwing the object of the robotic arm indicates that the object is separated from the robotic arm. For example, after the object is separated from the robotic arm, there is no interaction force between the object and the robotic arm, and there is no contact point between the object and the robotic arm. Exemplarily, a shape, a size, a material, a mass, and the like of the object are not limited. Further, at least one outer surface of the object is a curved surface, or at least one edge of the outer surface of the object is a curve. In all implementation, the object can roll and/or slide on the robotic arm under the gravity. For example, the object is a bottle, a bar, a sphere, an irregular object, or the like. Still further, a cross section of the object is a circle, an ellipse, or a closed shape formed by a curve.

FIG. 5 is a schematic diagram of a robotic arm according to all embodiments of the present disclosure. A object 402 may be placed at the first position on a robotic arm 401 other than an end 401a. Refer to FIG. 5. A description is made by using an example in which the object 402 is a bottle. The bottle is placed on a forearm of the robotic arm 401. Exemplarily, the robotic arm throws the object, and the object obtains a vertical upward velocity. A vertical upward direction is opposite to a gravity direction. Further, a component of a velocity of the object in the vertical upward direction may be a positive value. Whether the object has a velocity component in another direction is not limited in all embodiments of the present disclosure. For example, the object further has a velocity component in any direction on a plane perpendicular to a vertical direction.

**Operation 515:** Acquire a first control signal.

Exemplarily, the first control signal is configured to control the robotic arm to receive the thrown object at a second position on the robotic arm. The second position may be any position on the robotic arm, or a position on the robotic arm other than the end. In all embodiments of the present disclosure, the first control signal controls the robotic arm to move with reference to motion trajectory information of the object. The first control signal may be generated by the controller, or may be generated by another device and transmitted to the controller. A method for acquiring the first control signal is not limited in this application. Exemplarily, the first control signal carries control information, and a method for transmitting the first control signal includes, but is not limited to, at least one of an electrical signal and an optical signal. In all embodiments of the present disclosure, the first control signal is also referred to as first control information. Similarly, a second control signal below may also be referred to as second control information. A third control signal, a fourth control signal, and other more control signals herein are similar to the above and are not exemplified one by one. The first control signal may be configured to control each link of the robotic arm to move along one or more rotation axes. The first control signal usually controls, by controlling at least one torque, the robotic arm to move.

**Operation 520:** Control, based on the first control signal, the robotic arm to receive the thrown object.

In all embodiments of the present disclosure, the robotic arm may receive the object at a second position on the robotic arm. For example, the robotic arm may catch the object at the second position on the robotic arm. The second position may be any position on the robotic arm, or a position on the robotic arm other than the end, that is, the robotic arm performs nonprehensile manipulation on the object at any position on the robotic arm, or any position on the robotic arm other than the end. Contact between any position on the robotic arm other than the end and the object does not constitute at least one of form closure and force closure for the object. In all embodiments of the present disclosure, the second position and the first position may be the same or different.

In all embodiments of the present disclosure, the robotic arm may receive the thrown object during motion of the object in space, that is, the object is caught by a non-end link of the robotic arm when moving in space. Exemplarily, after the robotic arm throws the object, the object is separated from the robotic arm, and moves in space according to parabolic motion or parabolic-like motion. In all embodiments of the present disclosure, the robotic arm catches the moving object. Further, before the robotic arm grasps the object, at least one of a position, a velocity, and an acceleration of the object changes, and the object is moving. Further, when the robotic arm catches the object, the robotic arm is in contact with the object.

**Operation 525:** Acquire a second control signal.

Exemplarily, the second control signal is configured to control the robotic arm to move, to cause the object to be in a force balance state at a third position on the robotic arm. Similar to the first control signal, a method for acquiring the second control signal is not limited in this application. Similar to the first control signal, the second control signal may be configured to control each link of the robotic arm to move along one or more rotation axes. The second control signal usually controls, by controlling at least one torque, the robotic arm to move.

**Operation 530:** Control the robotic arm, based on the second control signal, to cause the object to be in a force balance state.

Based on the second control signal, all embodiments of the present disclosure may cause the object to be in a force balance state at a third position. In other words, the object reaches the force balance state at the third position on the robotic arm, that is, the object is in balance at the third position on the robotic arm. In all embodiments of the present disclosure, the first position, the second position and the third position are all different, or at least two of them are the same. An objective of controlling the robotic arm is to ensure that the object is in a force balance state on the robotic arm, and is always in balance on the robotic arm without falling. Exemplarily, the force balance state (also referred to as being in balance) of the object includes at least one of the following two states: a static balance state in which the object is stationary on the robotic arm, for example, the object reaches the force balance state at the third position; and a dynamic balance state in which the object moves or rolls on the robotic arm without falling, for example, the object may be in a state of uniform linear motion relative to the robotic arm. In all embodiments of the present disclosure, a velocity and a direction of movement or rolling of the object on the robotic arm are not limited. Exemplarily, the balance state is configured to indicate that the movable object is in a state of force balance. In this case, the movable object may no longer move, or may be in a state of uniform linear motion relative to the robotic arm. Further, a moving velocity of the movable object is less than a preset velocity, such as 1 centimeter per second, that is, the movable object is in a state of small motion. Still further, the balance state is configured to indicate that the movable object is in a state of force balance and no longer moves (the movable object remains stationary relative to the robotic arm).

In conclusion, according to the method provided in all embodiments of the present disclosure, a new method for using a robotic arm is provided. The robotic arm can first throw the object, receive the object, and re-balance the object. The controller controls the robotic arm to implement the action of throwing and receiving the object. Therefore, a method for controlling a robotic arm to throw and receive an object and maintain the balance of the object is developed.

According to the robotic arm control method provided in this application, the method of controlling a robotic arm to throw an object and then receiving the thrown object may be implemented by one arm, or may be implemented by two arms. Details are described below. In addition, the following two embodiments in which one or two arms throw and receive the object and maintain the balance of the object may be combined with other embodiments of this application to form a new embodiment. This is not limited in this application.

In an example, the robotic arm control method is performed by a controller of a robotic arm. In all embodiments of the present disclosure shown in FIG. 4, operation 510 may be implemented as sub-operation 1, operation 520 may be implemented as sub-operation 2, and operation 530 may be implemented as sub-operation 3.

**Sub-operation 1:** Control a first arm to throw an object placed on the robotic arm.

Exemplarily, the robotic arm includes the first arm. In addition, a structure of the first arm is not limited in all embodiments of the present disclosure. In all embodiments of the present disclosure, the first arm is the robotic arm with a plurality of degrees of freedom shown in FIG. 1. In all embodiments of the present disclosure, the method for controlling a robotic arm to throw an object and then receive the thrown object is implemented by the first arm. Exemplarily, the action of throwing the object of the first arm indicates that the object is separated from the first arm.

**Sub-operation 2:** Control, based on a first control signal, the first arm to receive the thrown object.

In all embodiments of the present disclosure, the first arm performs nonprehensile manipulation on the object to receive the object at the second position of the first arm. Exemplarily, nonprehensile manipulation is configured to indicate that a robotic hand or a claw-like structure is not needed to perform prehensile manipulation. Exemplarily, nonprehensile manipulation is configured to indicate that by adjusting an angle, a position, or the like of the first arm, the object gets in contact with a forearm or an upper arm of the first arm. Contact between any position on the first arm other than the end and the object does not constitute at least one of form closure and force closure for the object. Exemplarily, form closure refers to a contact and closure state achieved through matching of shapes of two objects. Form closure may be implemented through matching of geometrical shapes, for example, through matching of a concave shape and a convex shape, or through matching of assembly parts such as a thread and a gear. Exemplarily, force closure refers to a contact and closure state achieved by applying a force to two objects. When a contact surface between two objects is subjected to sufficient pressure or friction, contact and closure may be kept by applying a force. Force closure may be implemented by applying an external force, for example, two objects are fastened together through a bolt, or a workpiece is fixed on a work table by using a jig. Exemplarily, the end of the robotic arm is configured to indicate an end, away from a shoulder joint, of the robotic arm. In all embodiments of the present disclosure, the first arm includes a plurality of links connected head to tail. For example, the first arm includes a link 1 and a link 2, a first end of the link 1 is a shoulder joint, a second end of the link 1 is connected to a first end of the link 2, and the end of the first arm is configured to indicate a second end of the link 2 (i.e., the forearm). In all embodiments of the present disclosure, the end is further understood as a robotic apparatus connected to the end, away from the shoulder joint, of the first arm, such as a robotic hand providing a grasping function, a magnetic sucker providing an adsorption capability, or a bionic hand providing a bionic motion capability. For example, the first arm includes a link 1 and a link 2, a first end of the link 2 is connected to the link 1, a second end of the link 2 is a robotic hand, and the end of the is configured to indicate the robotic hand on the link 2. In all embodiments of the present disclosure, the end of the first arm is configured to indicate the end, away from the shoulder joint, of the independently movable first arm in the robotic arm. Similarly, an end of a second arm is configured to indicate an end, away from a shoulder joint, of the independently movable second arm in the robotic arm. The introduction about the end of the robotic arm in all embodiments of the present disclosure may be applied to operation 520 in the foregoing content, or may be applied to sub-operation 5 and sub-operation 6 in the following content, and other embodiments. This is not limited in this application.

**Sub-operation 3:** Control the first arm based on a second control signal, to cause the object to be in a force balance state.

Exemplarily, the object is in force balance state on the first arm. An objective of controlling the first arm is to ensure that the object is in a force balance state on the first arm, and is always in balance on the first arm without falling.

In conclusion, according to the method provided in all embodiments of the present disclosure, a new method for using a robotic arm is provided, which is completed by one arm. The first arm can be controlled to throw the object, and then receive the object, and cause the object to be in a force balance state. The controller controls the robotic arm to implement the action of throwing and receiving the object. Therefore, a method for controlling a robotic arm to throw and receive the object and maintain the balance of the object is developed.

In all embodiments of the present disclosure, the robotic arm control method is performed by a controller of a robotic arm. In all embodiments of the present disclosure shown in FIG. 4, operation 510 may be implemented as sub-operation 4, operation 520 may be implemented as sub-operation 5, and operation 530 may be implemented as sub-operation 6.

**Sub-operation 4:** Control a first arm to throw an object placed on the robotic arm.

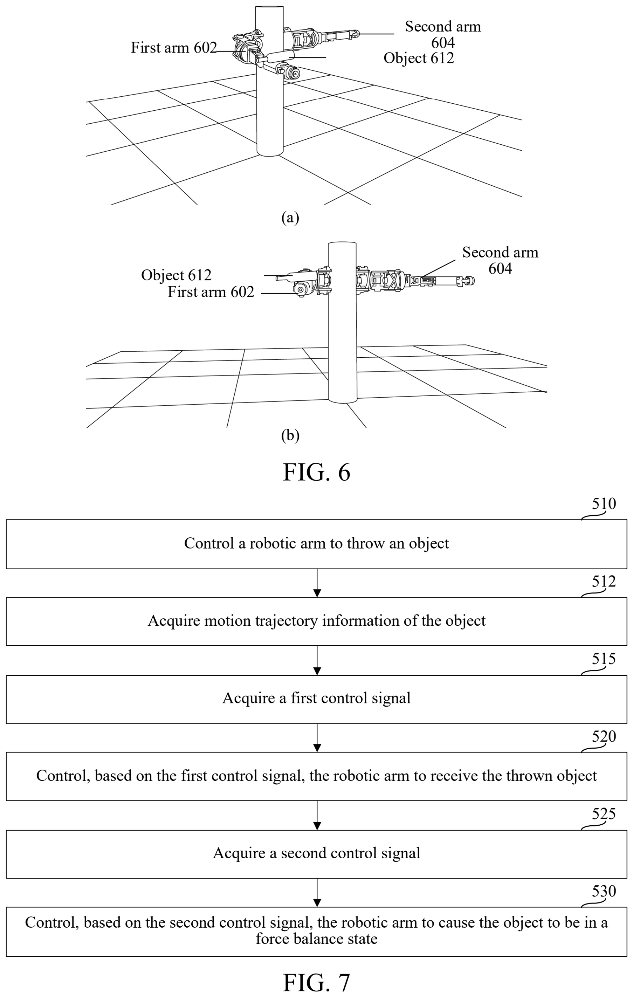

Exemplarily, the robotic arm includes a first arm and a second arm that move independently of each other. In addition, structures of the first arm and the second arm are not limited in all embodiments of the present disclosure. In all embodiments of the present disclosure, each of the first arm and the second arm is an arm with a plurality of degrees of freedom shown in FIG. 1. FIG. 6 is a schematic diagram of a robotic arm according to all embodiments of the present disclosure. Sub-graph (a) is a side view of the robotic arm, and sub-graph (b) is a front view of the robotic arm. A first arm 602 throws an object 612; and a second arm 604 catches the thrown object 612, and re-balances the object 612. In the figure, a description is made by using an example in which the object 612 is a bottle. A shape feature of the object is not limited in this application.

**Sub-operation 5:** Control, based on a first control signal, a second arm to receive the thrown object.

Exemplarily, the second arm performs nonprehensile manipulation on the object at the third position. Contact between third position on the second arm and the object does not constitute at least one of form closure and force closure for the object.

**Sub-operation 6:** Control the second arm based on a second control signal, to cause the object to be in a force balance state.

Exemplarily, the object is re-balanced on the second arm. An objective of controlling the second arm is to ensure that the object is in a force balance state on the second arm, and is always in balance on the second arm without falling.

In conclusion, according to the method provided in all embodiments of the present disclosure, a new method for using a robotic arm is provided, which is implemented by two arms. The first arm can be controlled to throw the object, and then the second arm is controlled to receive the object, and cause the object to be in the force balance state. The controller controls the robotic arm to implement the action of throwing and receiving the object. Therefore, a method for controlling a robotic arm to throw and receive an object and maintain the balance of the object is developed.

Next, the action of receiving the thrown object of the robotic arm is described.

FIG. 7 is a flowchart of a robotic arm control method according to all embodiments of the present disclosure. The method may be performed by a controller of a robotic arm. That is, based on all embodiments of the present disclosure shown in FIG. 4, the method further includes operation 512.

**Operation 512:** Acquire motion trajectory information of the object.

In all embodiments of the present disclosure, the robotic arm may comprise at least one joint. The motion trajectory information of the object is a motion trajectory of the object after being thrown into air. Exemplarily, the motion trajectory information includes a motion trajectory of a center of mass of the object, or includes a motion trajectory of at least one point on an outer surface of the object or in the object. This is not limited in all embodiments of the present disclosure.

In all embodiments of the present disclosure, the motion trajectory information may be predicted from the pose and velocity of the object when the object is separated from the robotic arm. The pose of the object includes the position and the posture of the object. The position of the object may be a position of a center of mass of the object, or a position of a pre-set point on the object or in the object. At the moment when the object is separated from the robotic arm, the pose and velocity of a first point of the robotic arm at the first position, from which the object is separated, can be considered the same as those of the object. The first point of the robotic arm, for example, may be a point of a forearm or an upper arm and contact with the object. The pose of the first point may be determined from an angular of each joint of the robotic arm, by the first preset kinematic model. The velocity of the first point of the robotic arm may be determined from an angular velocity of each joint of the robotic arm, by the first preset Jacobian Matrix. The first preset kinematic model represents relationship between the pose of the first point for throwing the object and the angular of each joint of the robotic arm. The first preset Jacobian Matrix represents relationship between the velocity of the first point and the angular velocity of each joint of the robotic arm. The angular and the angular velocity of each joint can be considered as an angular and an angular velocity of a link to which the respective joint outputs a torque. The angular and the angular velocity of each joint may be obtained from an encoder of a motor for driving the respective joint. In all embodiments of the present disclosure, the motion trajectory information may alternatively be obtained or predicted by at least two images of the object, when the object is separated from the robotic arm. The pose and velocity of the object may be determined from the at least two images of the object. In all embodiments of the present disclosure, it is preset that the first mapping relationship between the two-dimensional coordinates of the first preset points of the object in each image and the three-dimensional coordinates in a three-dimensional coordinate system. The first preset points may be marked at the object. The two-dimensional coordinates of the first preset points may be identified from the image. According to the first mapping relationship and the two-dimensional coordinates, the three-dimensional coordinates of the first preset points may be obtained. In addition, it is preset that a second mapping relationship between a center of mass of the object and the first preset points. According to the second mapping relationship, the three-dimensional coordinates of a center of mass of the object may be obtained. The third state may be obtained from the three-dimensional coordinates of a center of mass of the object and the center of mass of the first link of at least two images. The pose of the object may be determined from the three-dimensional coordinates of the first preset points. The velocity of the object may be determined from a difference between the first three-dimensional coordinates of a center of mass of the object at a first moment when obtaining a first image and the second three-dimensional coordinates of a center of mass of the object at a second moment when obtaining a second image.

In all embodiments of the present disclosure, the motion trajectory information may be predicted based on the position feature and the force feature of the object before the robotic arm throwing the object. The predicted parabolic trajectory may be represented by a parabolic trajectory function. Further, the position feature of the object includes, but is not limited to, position of the object before the object is separated from the robotic arm. The force feature of the object includes, but is not limited to, at least one of a joint angular position of the robotic arm, a joint angular velocity of the robotic arm, and a torque of the robotic arm. In a specific example, the position feature and the force feature of the object are sequential values changing with time. The foregoing information may be represented in the form of a vector or a matrix. A time difference between adjacent values in the sequential value may be predetermined, or may be carried in a sequence. This is not limited in all embodiments.

In all embodiments of the present disclosure, the method further includes acquiring a first motion trajectory of the robotic arm, along which the robotic arm is control to move, according to the motion trajectory information of the object; acquiring a first motion sequence of the robotic arm according to the first motion trajectory, the first motion sequence comprising multiple first motion states of the robotic arm at multiple control moments during movement of the robotic arm along the first motion trajectory, each first motion state at the respective control moment indicating a velocity and a pose of the robotic arm at the respective control moment. Each control moment may be a moment for generating a first control signal. In all embodiments of the present disclosure, the acquiring a first motion trajectory of the robotic arm may include: determining a sixth position for a second point of the robotic arm for receiving the thrown object. The second point may be contact point of the robotic arm when receiving the object. The pose and velocity of the second point of the robotic arm may be identical to those of the object when the object reaches the sixth position on the parabolic trajectory of the object. In other words, the motion trajectory of the second point intersects with the parabolic trajectory of the object at the sixth position. In all embodiments of the present disclosure, the sixth position may be determined from the parabolic trajectory of the object. For example, a first duration of the object's movement in the air is pre-set. The first duration may be a time duration between a moment when throwing the object and the other moment when receiving the object. According to the first duration and the parabolic trajectory of the object, the sixth position may be determined. Furthermore, a first motion trajectory of the robotic arm, along which the robotic arm is control to move, may be acquired according to the sixth position and a position of the second point when throwing the object. In other words, the first motion trajectory is a motion trajectory from the position of the second point when throwing the object to the sixth position. In all embodiments of the present disclosure, each first motion state at the respective control moment may be the first motion state of the second point of the robotic arm. According to the pose and velocity of the second point at the sixth position and the pose and velocity of the second point at the position of the second point when throwing the object, poses of the second point at multiple control moments may be obtained by pose interpolating. According to the poses of the second point at multiple control moments, the velocity of the second point at each control moment may be obtained. The method further includes determining a first state of the robotic arm at each control moment according to the first motion state at the respective control moment, the first state being configured to indicate a first angle and a first angular velocity of each of the at least one joint; and acquiring a second state of the robotic arm, the second state indicating a second angle and a second angular velocity of each of the at least one joint at the respective control moment; determining the first control signal at the respective control moment according to the first state and the second state.

In all embodiments of the present disclosure, the motion trajectory information includes a parabolic trajectory of the object after the object is separated from the robotic arm. The first control signal is configured to control the robotic arm to receive the thrown object at the second position. Exemplarily, the second position is on a forearm or an upper arm. A motion mode of the robotic arm is obtained based on the motion trajectory information, which enables the robotic arm to catch the thrown object in a suitable pose. Exemplarily, the robotic arm is instructed to move with reference to the motion trajectory information of the object, and the motion mode of the robotic arm that is indicated by the first control signal gradually reduces a relative velocity between a second point of the robotic arm and the object. In this way, the second point of the robotic arm is stationary relative to the object, and the robotic arm receives the object.

In all embodiments of the present disclosure, the robotic arm control method provided in all embodiments of the present disclosure is implemented by a proportion integration differentiation (PID) controller. The PID controller is a feedback loop component used in an industrial control application. According to a control principle of the PID controller, collected data may be compared with a corresponding reference value (which may be understood as an expected value or a target value), and a new input values is calculated based on a difference between the collected data and the corresponding reference value. An objective of the new input value is to enable data of a system to reach or remain at the reference value. Exemplarily, according to the first control signal, the robotic arm is controlled to catch the thrown object at the second position of the robotic arm.

After the first control signal is determined, the robotic arm may be controlled according to the first control signal.

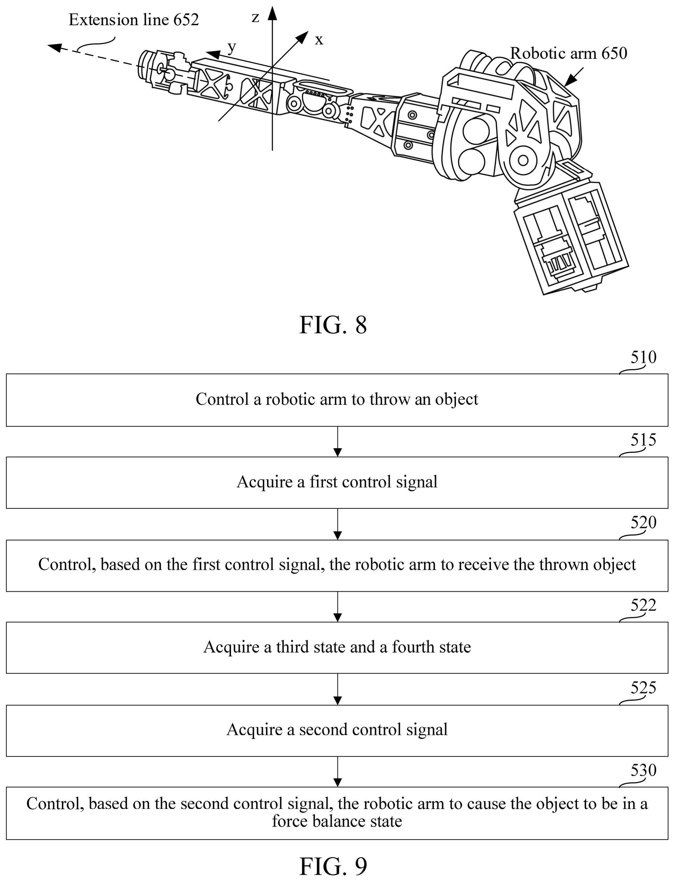

In all embodiments of the present disclosure, the first control signal includes a first control torque for each of the at least one joint. The first control torque may be a control torque for one or more rotation axes, and the first control torque is configured to control motions of a respective link to which the respective joint outputs a torque. FIG. 8 is a schematic diagram of a robotic arm and an object according to an exemplary embodiment of this application. Exemplarily, FIG. 8 is a schematic diagram of a fully extended robotic arm. A direction of an extension line 652 of the extended robotic arm 650 is defined as a y direction, a direction of a horizontal line perpendicular to the extension line of the extended robotic arm 650 is defined as an x direction, and a direction of a longitudinal line perpendicular to the extension line of the extended robotic arm 650 is defined as a z direction. The first control torque may be configured to control a link of the robotic arm to rotate about at least one rotation axis in the x direction, the y direction, or the z direction.

In conclusion, according to the method provided in all embodiments of the present disclosure, a new method for using a robotic arm is provided. The robotic arm can first throw the object, receive the object at the second position, and cause the object to be in the force balance state. The controller controls the robotic arm, that is, determines the first control signal according to the first state and the second state, and controls the robotic arm to receive the thrown object at the second position. Therefore, a method for controlling a robotic arm to throw and receive an object at any position other than an end and maintain the balance of the object is developed.

In all embodiments of the present disclosure, the robotic arm control method is performed by a controller of a robotic arm. In the embodiment shown in FIG. 7, operation 515 may be implemented as sub-operation 11 to sub-operation 13.

**Sub-operation 11:** Determine a first state of a robotic arm at each control moment according to the first motion state at the respective control moment.

In all embodiments of the present disclosure, the first state at each control moment may be configured to indicate a first angle and a first angular velocity of each of the at least one joint at each control moment. The first state at each control moment is an expected state at the respective control moment. An first angle of each joint of the robotic arm, may be determined from the pose of the second point, by the second preset kinematic model. A first angular velocity of each joint of the robotic arm may be determined from the velocity of the second point of the robotic arm, by the second preset Jacobian Matrix. The pose of the second point at the sixth position may be predicted from the pose of the object when the object reaches the sixth position. An angular of each joint of the robotic arm, may be determined from the pose of the second point, by the second preset kinematic model. An angular velocity of each joint of the robotic arm may be determined from the velocity of the second point of the robotic arm, by the second preset Jacobian Matrix. The second preset kinematic model represents relationship between the pose of the second point and the angular of each joint of the robotic arm. The second preset Jacobian Matrix represents relationship between the velocity of the second point and the angular velocity of each joint of the robotic arm. The angular and the angular velocity of each joint can be considered as an angular and an angular velocity of a link to which the respective joint outputs a torque. The angular and the angular velocity of each joint may be obtained from an encoder of a motor for driving the respective joint. In all embodiments of the present disclosure, the first state may be determined by modifying the motion trajectory information of the object according to a shape feature of the object. Modification of the motion trajectory information based on the shape feature of the object is to ensure contact between the robotic arm and the object. Specifically, the motion trajectory information of the object is modified based on the shape feature of the object, to determine the first state. In this way, the second point of the robotic arm (for example, a point of the forearm of the robotic arm shown in FIG. 5) gets in contact with a lower edge of the object in a vertical direction. Exemplarily, the vertical direction and a direction of the earth gravity are on a same straight line, and a horizontal plane is a plane in which a horizontal direction perpendicular to the direction of the earth gravity is located.

**Sub-operation 12:** Acquire a second state of the robotic arm. The second state indicates a second angle and a second angular velocity of each of the at least one link at the respective control moment. In other words, the second state is the actual state of the robotic arm at the respective control moment.

**Sub-operation 13:** Determine a first control signal at the respective control moment according to the first state and the second state. In all embodiments of the present disclosure, the first control signal includes a first control torque for each of the at least one joint at each control moment. The determining the first control signal according to the first state and the second state comprises: determining a first control torque for each of the at least one joint at the respective control moment according to a first difference between the first angle of the respective joint and the second angle of the respective joint, and a second difference between the first angular velocity of the respective joint and the second angular velocity of the respective joint. The first control signal is configured to control the robotic arm to change to the first state from the second state.

Exemplarily, this operation may be implemented as the following sub-operations.

The first control torque for each of the at least one joint is determined according to a first difference between the first angle of the respective joint and the second angle of the respective joint, and a second difference between the first angular velocity of the respective joint and the second angular velocity of the respective joint .

The first control torque is configured to indicate a torque for the respective joint rotating around a first rotation axis, and the first rotation axis is a horizontal line perpendicular to the respective link; and/or the first control torque is configured to indicate a torque for the respective joint rotating around a second rotation axis, and the second rotation axis is an extension line of the respective link. Refer to FIG. 8. The first rotation axis is along the x direction, and the second rotation axis is along the y direction in FIG. 8. In all embodiments of the present disclosure, the extension line of the robotic arm indicates an extension direction of the robotic arm when the robotic arm is straightened. Exemplarily, FIG. 8 shows the extension line of the straightened robotic arm. Exemplarily, the extension line is a ray pointing from the end of the robotic arm to outside the robotic arm. A direction of the extension line is parallel to a direction pointing from a center of mass of the forearm of the robotic arm to the end of the robotic arm. For example, in FIG. 8, the extension line is parallel to the y axis. Exemplarily, the extension line in FIG. 8 starts from the forearm of the robotic arm. Exemplarily, the extension line may start from any position on the robotic arm. In another implementation, the direction of the extension line is indicated by using a ray starting from a position other than the robotic arm. This is not limited in this embodiment. In all embodiments of the present disclosure, there is a first difference between the first angle of the respective joint and the second angle of the respective joint, and a second difference between the first angular velocity of the respective joint and the second angular velocity of the respective joint . A sum of a first product and a second product is determined as the first control torque. The first product is a product of the first difference and a first control parameter, and the first control parameter is also referred to as a proportional control parameter. The second product is a product of the second difference and a second control parameter, and the second control parameter is also referred to as a differential control parameter. Further, a sum of the first product, the second product, and a third product is determined as the first control torque. The third product is a product of an integral calculation result of the first difference and a third control parameter, and the third control parameter is also referred to as an integral control parameter.

Specifically, the robotic arm control method provided in all embodiments of this application is performed by the PID controller, and a first control torque for a link is further determined according to at least one of the proportional control parameter, the differential control parameter, and the integral control parameter. The PID controller may be implemented by using the following formula:

$$\tau = k_p(a^{ref} - a) + k_d(\dot{a}^{ref} - \dot{a}) + k_i \int_{t_s}^{t_f} (a^{ref} - a) \, dt;$$

where, $\tau$ represents the first control torque for a joint, $a$ represents a first angle of the joint , $\dot{a}$ represents a first angular velocity of the joint, $\dot{a}$ is a first-order derivative of $a$ about time, $a^{ref}$ and $\dot{a}^{ref}$ respectively represent a second angle of the joint and a second angular velocity of the joint, and $k_p$, $k_d$, and $k_i$ respectively represent the proportional control parameter, the differential control parameter, and the integral control parameter. Exemplarily, the proportional control parameter, the differential control parameter, and the integral control parameter are preset empirical values. $t_s$ and $t_f$ respectively represent a start moment for outputting the first control torque to the joint and the current time (i.e., a control moment).

In all embodiments of the present disclosure, the first control torque may be configured to control the joint to rotate around the first rotation axis in the x direction and rotate around the second rotation axis in the y direction in FIG. 8, respectively. For example, the first control torque includes two sub-torques, which are configured to respectively control the link in the foregoing two directions. The formula for determining the first control torque may be implemented as the following two formulae, which respectively represent the sub-torques. For example,

$$\tau_1 = k_{p1}\left(a_1{}^{ref} - a_1\right) + k_{d1}\left(\dot{a}_1{}^{ref} - \dot{a}_1\right) + k_{i1} \int_{t_s}^{t_f} \left(a_1{}^{ref} - a_1\right) dt;$$

$$\tau_2 = k_{p2}\left(a_2{}^{ref} - a_2\right) + k_{d2}\left(\dot{a}_2{}^{ref} - \dot{a}_2\right) + k_{i2} \int_{t_s}^{t_f} \left(a_2{}^{ref} - a_2\right) dt;$$

where, $\tau_1$ represents a first sub-torque for controlling a joint to rotate around the first rotation axis in the x direction, $a_1$ represents an first angle of the joint rotating around the first rotation axis in the x direction, $\dot{a}_1$ represents a first angular velocity of the joint rotating around the first rotation axis in the y direction; and $a_1{}^{ref}$ and $\dot{a}_1{}^{ref}$ represent a second angle of the joint rotating around the first rotation axis and a second angular velocity of the joint rotating around the first rotation axis. $\tau_2$ represents a second sub-torque for controlling a joint to rotate around the second rotation axis in the y direction, $a_2$ represents a fourth angle of the joint rotating around the second rotation axis in the y direction when the robotic arm receiving the thrown object, $\dot{a}_2$ represents a fourth angular velocity of the joint rotating around the second rotation axis in the x direction when the robotic arm receiving the thrown object; and $a_2{}^{ref}$ and $\dot{a}_2{}^{ref}$ represent a fifth angle of the joint rotating around the second rotation axis and a fifth angular velocity of the joint rotating around the second rotation axis in the y direction.

$k_{p1}$, $k_{d1}$, and $k_{i1}$ respectively represent the proportional control parameter, the differential control parameter, and the integral control parameter, $k_{p2}$, $k_{d2}$, and $k_{i2}$ respectively represent the proportional control parameter, the differential control parameter, and the integral control parameter, and $t_s$ and $t_f$ respectively represent for outputting the first control torque to the joint and the current time (i.e., a control moment).

In conclusion, according to the method provided in this embodiment, a new method for using a robotic arm is provided. The robotic arm can first throw the object, receive the object, and cause the object to be in the force balance state. The controller controls the robotic arm, that is, the PID controller determines the first control signal according to the first state of the robotic arm and the second state, and controls the robotic arm to receive the thrown object. Therefore, a method for controlling a robotic arm to throw and receive an object and maintain the balance of the object is developed.

Next, the action of re-balancing the object of the robotic arm is described.

FIG. 9 is a flowchart of a robotic arm control method according to an exemplary embodiment of this application. The method may be performed by a controller of a robotic arm. That is, based on the embodiment shown in FIG. 4, the method further includes operation 522.

**Operation 522:** Acquire a third state after the first arm receiving the thrown object and a fourth state for causing the object to be in a force balance state.

In all embodiments of the present disclosure, the third state comprises at least one of the following: (i) a first offset and a first offset velocity, and (ii) a second offset and a second offset velocity. The first offset is an offset of a center of mass of the object relative to a center of mass of a first link in a first direction. The first direction is a direction along which the first link extends, for example, the x direction. The first offset velocity is an offset velocity of the center of mass of the object relative to the center of mass of the first link in the first direction. The second offset is an offset of a center of mass of the object relative to a center of mass of a first link in a second direction. The second direction is a horizontal direction perpendicular to the first link, for example, the y direction. The second offset velocity is an offset velocity of the center of mass of the object relative to the center of mass of the first link in the second direction. The first link is a link of the robotic arm for receiving the thrown object. The fourth state comprises at least one of the following: (iii) a first pre-set offset and a first pre-set offset velocity of the center of mass of the object relative to the center of mass of the first link in the first direction, and (iv) a second pre-set offset and a second pre-set offset velocity of the center of mass of the object relative to the center of mass of the first link in the second direction. For example, the first pre-set offset and second pre-set offset may be 0, the first pre-set offset velocity and second pre-set offset velocity may be 0. In all embodiments of the present disclosure, the third state may represent contact information of the robotic arm and the object. The contact information is configured for indicating an interaction between the robotic arm and the object, for example, at least one of features such as a mechanics feature and a position feature. A description is made by taking the position feature as an example, the third state is at least one of information such as a contact position between the robotic arm and the object, and a velocity and an acceleration at the contact position. In all embodiments of the present disclosure, the contact position is at least one of a contact point, a contact line, and a contact surface between the robotic arm and the object. In all embodiments of the present disclosure, a method for recording the contact information is not limited in embodiments of the present disclosure. A coordinate system may be constructed by taking the robotic arm as a reference object to indicate the contact information, or a natural coordinate system may be constructed by taking the ground as a reference object, or a coordinate system may be constructed in another manner. Exemplarily, the second control signal is determined according to the third state and a fourth state. The second control signal is determined for the robotic arm according to the third state and the fourth state. Exemplarily, the fourth state is configured to indicate posture information of the robotic arm re-balancing the object on the robotic arm. In all embodiments of the present disclosure, the fourth state is configured to indicate a velocity of the object. If the fourth state is 0, it may be understood as that the object is expected to be in a static balance state, and the object is stationary on the robotic arm. If the fourth state is not 0, it may be understood as that the object is expected to be in a dynamic balance state, in which the object moves or rolls on the robotic arm without falling.

In all embodiments of the present disclosure, the robotic arm control method provided in all embodiments of the present disclosure is implemented by a PID controller. Exemplarily, according to the second control signal, the robotic arm is controlled to re-balance the object.

After the second control signal is determined, the robotic arm may be controlled according to the second control signal.

Further, the second control signal may be a control signal for one or more rotation axes. The second control signal is usually configured to control motions of the robotic arm by controlling at least one torque. Refer to FIG. 8. The second control signal may be configured to control the robotic arm to rotate about at least one rotation axis in the x direction, the y direction, or the z direction.

In conclusion, according to the method provided in this embodiment, a new method for using a robotic arm is provided. The robotic arm can throw the object, and then receive the object, and cause the object to be in a force balance state. The controller controls the robotic arm, that is, determines the second control signal according to the third state and the fourth state of the robotic arm, and controls the robotic arm to re-balance the object at any position. Therefore, a method for controlling a robotic arm to throw and receive an object at any position and maintain the balance of the object is developed.

In all embodiments of the present disclosure, the robotic arm control method is performed by a controller of a robotic arm. That is, in the embodiment shown in FIG. 9, operation 525 may be implemented as sub-operation 21.

**Sub-operation 21:** Determine a second control signal according to a difference between the fourth state and the third state.

For the third state and the fourth state, refer to the foregoing descriptions. The second control signal is information configured to control the robotic arm to re-balance the object at any position.

In all embodiments of the present disclosure, the third state comprises at least one of the following: (i) a first offset and a first offset velocity, and (ii) a second offset and a second offset velocity. The fourth state comprises at least one of the following: (iii) a first pre-set offset and a first pre-set offset velocity of the center of mass of the object relative to the center of mass of the first link in the first direction, and (iv) a second pre-set offset and a second pre-set offset velocity of the center of mass of the object relative to the center of mass of the first link in the second direction. The second control signal is determined by taking the third state as a reference, and taking the fourth state as a motion target. The second control signal is configured to control the robotic arm to move to the fourth state. Exemplarily, the second control signal is determined based on a product of a control parameter and the foregoing difference.

Exemplarily, this operation may be implemented as the following sub-operations.

In all embodiments of the present disclosure, the determining the second control signal according to a difference between the fourth state and the third state comprises at least one of: determining a second control torque according to a third difference between the first pre-set offset and the first offset, and a fourth difference between the first pre-set offset velocity and the first offset velocity; and determining a third control torque according to a fifth difference between the second pre-set offset and the second offset, and a sixth difference between the second pre-set offset velocity and the second offset velocity.

The second control torque is configured to indicate a torque for controlling the first link to rotate around the first rotation axis in the second direction, for example, x direction. The third control torque is configured to indicate a torque for controlling the first link to rotate around the second rotation axis in the first direction, for example, the y direction. Exemplarily, a sum of a fourth product and a fifth product is determined as the second control torque. The fourth product is a product of the third difference and a fourth control parameter, and the fourth control parameter is also referred to as a proportional control parameter. The fifth product is a product of the fourth difference and a fifth control parameter, and the fifth control parameter is also referred to as a differential control parameter. Exemplarily, a sum of the fourth product, the fifth product, and a sixth product is determined as the second control torque. The sixth product is a product of an integration calculation result of the third difference and a sixth control parameter, and the sixth control parameter is also referred to as an integral control parameter. Exemplarily, a sum of the seventh product, the eighth product, and a ninth product is determined as the third control torque. The seventh product is a product of the fifth difference and a seventh control parameter, and the seventh control parameter is also referred to as a proportional control parameter. The eighth product is a product of the sixth difference and a eighth control parameter, and the eighth control parameter is also referred to as a differential control parameter. The ninth product is a product of an integration calculation result of the fifth difference and a ninth control parameter, and the ninth control parameter is also referred to as an integral control parameter.

Specifically, the robotic arm control method provided in all embodiments of the present disclosure is performed by the PID controller, and a control signal is further determined according to at least one of the proportional control parameter, the differential control parameter, and the integral control parameter. According to the control principle of the PID controller, a description is made by using an example in which the second control signal is the second control torque, the PID controller may be implemented by using the following formula:

$$\tau = k_p(y^{ref} - y) + k_d(\dot{y}^{ref} - \dot{y}) + k_i \int_{t_s}^{t_f} (y^{ref} - y)\, dt;$$

where, $\tau$ represents the second control torque, y represents the first offset, $\dot{y}$ represents the first offset velocity, $\dot{y}$ is a first-order derivative of y about time, $y^{ref}$ and $\dot{y}^{ref}$ respectively represent the first pre-set offset and the first pre-set offset velocity, $k_p$, $k_d$, and $k_i$ respectively represent the proportional control parameter, the differential control parameter, and the integral control parameter, and $t_s$ and $t_f$ respectively represent a start moment and a current time.

In all embodiments of the present disclosure, the second control torque is configured to indicate a torque for controlling the first link to rotate around the first rotation axis in the x direction as shown in FIG. 8. The third control torque is configured to indicate a torque for controlling the first link to rotate around the second rotation axis in the y direction. The formula of the second control torque and the third control torque may be implemented as the following two formulae.

$$\tau_1 = k_{p1}\left(y_1{}^{ref} - y_1\right) + k_{d1}\left(\dot{y}_1{}^{ref} - \dot{y}_1\right) + k_{i1}\int_{t_s}^{t_f}\left(y_1{}^{ref} - y_1\right)dt;$$

$$\tau_2 = k_{p2}\left(y_2{}^{ref} - y_2\right) + k_{d2}\left(\dot{y}_2{}^{ref} - \dot{y}_2\right) + k_{i2}\int_{t_s}^{t_f}\left(y_2{}^{ref} - y_2\right)dt;$$

where, $\tau_1$ represents the second control torque, $y_1$ represents the first offset, $\dot{y}_1$ represents the first offset velocity, and $\dot{y}_1{}^{ref}$ and $\dot{y}_1{}^{ref}$ respectively represent the first pre-set offset and the first pre-set offset velocity.

$\tau_2$ represents the third control torque, $y_2$ represents the second offset, $\dot{y}_2$ represents the second offset velocity, and $y_2{}^{ref}$ and $\dot{y}_2{}^{ref}$ represent the second pre-set offset and the second pre-set offset velocity.

$k_{p1}$, $k_{g1}$, and $k_{i1}$ respectively represent the proportional control parameter, the differential control parameter, and the integral control parameter, $k_{p2}$, $k_{d2}$, and $k_{i2}$ respectively represent the proportional control parameter, the differential control parameter, and the integral control parameter, and $t_s$ and $t_f$ respectively represent a start moment and a current moment. In addition, in all embodiments of the present disclosure, for ease of presentation, the parameter symbols of the proportional control parameter, the differential control parameter, the integral control parameter, and the start and finish moments are the same as those in the formulae in sub-operation 11, but the parameters are valued independently of each other and usually have different values.

In all embodiments of the present disclosure, it is determined, according to state estimation of the robotic arm and the object, that the object is in a relatively stable state on the robotic arm. For example, a contact position between the robotic arm and the object is close to a center of mass of the first link, and the center of mass of the object is also close to the center of mass of the first link. For another example, a difference between coordinates of the contact position between the robotic arm and the object and coordinates of the center of mass of the first link is less than a first threshold, and a difference between coordinates of the center of mass of the object and the coordinates of the center of mass of the first link is less than a second threshold. The first threshold and the second threshold are set according to actual requirements, and are not limited in this application.

In all embodiments of the present disclosure, if the object is expected to be in balance on the robotic arm, $y_1{}^{ref} = 0$. If the object is expected to be in a static balance state on the robotic arm, $\dot{y}_l{}^{ref} = 0$. If the center of mass of the object is expected to be as close as possible to the center of mass of the first link in the direction of the x direction, $y_2{}^{ref} = 0$. If a moving velocity (i.e., offset velocity) of the center of mass of the object in the x direction is expected to be as small as possible, $\dot{y}_2{}^{ref} = 0$. According to the second control torque and the third control torque, the robotic arm causes the object to be in the static balance state on the robotic arm, which may also be understood as that the object is stationary relative to the robotic arm.

In all embodiments of the present disclosure, it is determined, according to state estimation of the robotic arm and the object, that the object is in a relatively unstable state on the robotic arm. For example, the contact position between the robotic arm and the object is away from the center of mass of the first link, and/or the center of mass of the object is also away from the center of mass of the first link. Specifically, the relatively unstable state of the object on the robotic arm is configured to indicate that the difference between the coordinates of the contact position between the robotic arm and the object and the coordinates of the center of mass of the first link is not less than the first threshold, and/or the difference between the coordinates of the center of mass of the object and the coordinates of the center of mass of the first link is not less than the second threshold. The first threshold and the second threshold may be set according to actual requirements, and are not limited in this application.

In all embodiments of the present disclosure, a value may be assigned to expected state (i.e., the fourth state) according to a state estimation result. The assigned value may be 0, or may be a value other than 0. According to the second control torque and/or the third control torque, the robotic arm causes the object in the dynamic balance state on the robotic arm, which may also be understood as that the object moves or rolls on the robotic arm without falling. Exemplarily, in a case that the object is in the relatively unstable state on the robotic arm, the assigned value of the fourth state is not equal to 0. In a case that the object is not in the relatively unstable state on the robotic arm, the assigned value of the fourth state is 0. In addition, in a case that the object is in the relatively unstable state on the robotic arm, the contact position between the robotic arm and the object is away from the center of mass of the first link, and/or the center of mass of the object is also away from the center of mass of the first link. That is, the object is located on a side of the robotic arm.

However, in a process of controlling motions of the robotic arm to re-balance the object, the contact position between the robotic arm and the object approaches the center of mass of the first link, and the center of mass of the object approaches the center of mass of the first link. This helps the robotic arm maintain a small velocity relative to the object. In a case that the object is in the relatively unstable state on the robotic arm, the assigned value of the fourth state is not equal to 0, whereby the object is balanced quickly, and efficiency of controlling the robotic arm based on the second control signal, to maintain the object in a force balance state again is improved.

In conclusion, according to the method provided in this embodiment, a new method for using a robotic arm is provided. The robotic arm can first throw the object, receive the object at any position other than the end, and re-balance the object. The controller controls the robotic arm, that is, the PID controller determines the second control signal according to the third state and the fourth state of the robotic arm, and controls the robotic arm to re-balance the object at any position. Therefore, a method for controlling a robotic arm to throw and catch the object at any position and maintain the balance of the object is developed.

Next, acquisition of the third state is further described through several examples. The third state is acquired based on a visual sensor, or acquired based on the visual sensor and a tactile sensor.

In all embodiments of the present disclosure, for deployment positions of the visual sensor and the tactile sensor, the visual sensor is arranged on the robotic arm, or arranged outside the robotic arm; and the tactile sensor is arranged on the housing of the robotic arm and may serve as an electronic skin of the robotic arm. In all embodiments of the present disclosure, a joint coder is mounted on a joint motor of each of at least one joint, each of which is used to control a respective link of the robotic arm. The joint coder is configured to feed back a rotation angle, an angular velocity, and current information of a respective joint. The information from the joint coder may be configured for state estimation of the robotic arm. In all embodiments of the present disclosure, the tactile sensor may be arranged on a finger, a palm, and a link of the robotic arm and is configured to acquire feedback information of the object. In all embodiments of the present disclosure, the third state may be acquired by using a proximity sensor. The proximity sensor is configured to transmit a signal when two objects approach, and when the object approaches the proximity sensor, the third state may be obtained according to the signal. Exemplarily, for the case that the third state includes a first offset and a first offset velocity, the proximity sensors are deployed on the object and a rotatable joint of the robotic arm. The first offset is obtained by subtracting a distance between an outer surface, where the sensor is deployed, of the object and the center of mass from a signal transmitted by the proximity sensor, to acquire first offset. The first offset velocity is obtained from the first offset velocities at two moments.

In all embodiments of the present disclosure, this application proposes the following three alternative implementations for acquiring the third state.

Implementation 1: Full-degree-of-freedom posture recognition of an object based on visual perception.

The robotic arm with 7 degrees of freedom shown in FIG. 1 to FIG. 3 is taken as an example. In the related art, 6-degree-of-freedom posture recognition of the object may be achieved by using a visual sensor, to determine a relative position relationship between the object and the robotic arm, and further, to determine the third state. Exemplarily, image information of the robotic arm and the object in six directions on three coordinate axes in a three-dimensional coordinate system is acquired, and a relative position relationship between the object and the robotic arm that is carried in the image information is extracted. In some embodiments, because the implementation relies on obtaining image information in six directions, a large volume of data needs to be processed during posture recognition, and operating time of posture recognition is approximately 100 milliseconds, namely, 10 Hz.

Implementation 2: Data image processing based on a visual sensor.

Exemplarily, this implementation corresponds to that in the embodiment shown in FIG. 9, operation 522 may be implemented as sub-operation 25.

Sub-operation 25: Acquire at least two images of the robotic arm with the object positioned on the robotic arm by the visual sensor; and determine the third state according to the at least two images.

In all embodiments of the present disclosure, the third state is obtained by performing data image processing on image information, the visual sensor is configured to acquire the image information, for example, the at least two images, and the third state is configured to indicate a position of the object in a dynamic system. In an embodiment, a lightweight data image processing method is applied to determine the position and velocity of the object in the dynamic system, namely, the third state. The dynamic system provides a reference system for describing the third state. For example, a camera is arranged on the robotic arm or in an external environment, to acquire image information of the robotic arm and the object. The image information is configured for displaying that the object is placed on the robotic arm. Subsequently, the image information is analyzed and processed, to obtain an image processing result, and the position of the object in the dynamic system is extracted. Exemplarily, after the image information is acquired, cluster analysis is performed on at least one type of information such as colors, materials, surface textures, and connected areas of the object and an object in an environment. The object and the robotic arm are isolated based on a difference between at least one type of information such as colors, materials, surface textures, and connected areas of the object and the robotic arm. A geometric center of the object is determined according to a shape of the object, and then, positions of the geometric center and the center of mass in the dynamic system may be determined. Based on this, the third state may be obtained with reference to related information of the robotic arm. For example, coordinates and a moving velocity of the contact position are determined according to the geometric center of the object, and an offset and an offset velocity are determined according to the position of the center of mass of the object. In all embodiments of the present disclosure, an operating speed of lightweight calculation in this implementation is relatively fast, and operating time is approximately 10 milliseconds, namely, 10 Hz. In all embodiments of the present disclosure, it is preset that the first mapping relationship between the two-dimensional coordinates of the first preset points of the object and the second preset points on the first link in the image and the three-dimensional coordinates in a three-dimensional coordinate system. The first preset points and the second preset points may be marked at the object and the first link. The two-dimensional coordinates of the first preset points and the second preset points may be identified from the image. According to the first mapping relationship and the two-dimensional coordinates, the three-dimensional coordinates of the first preset points and the second preset points may be obtained. In addition, it is preset that a second mapping relationship between a center of mass of the object and the first preset points and a third mapping relationship between a center of mass of the first link and the second preset points. According to the second mapping relationship and the third mapping relationship, the three-dimensional coordinates of a center of mass of the object and the center of mass of the first link may be obtained. The third state may be obtained from the three-dimensional coordinates of a center of mass of the object and the center of mass of the first link of at least two images.

In all embodiments of the present disclosure, sub-operation 25 may be implemented as follows:

The image information is acquired by using the visual sensor, and the image information is configured for displaying that the object is placed on the robotic arm.

The third state is determined according to the image processing result obtained through image information processing.

In all embodiments of the present disclosure, the third state includes the first offset, the first offset velocity, the second offset and the second offset velocity. The image processing result obtained through image information processing is configured to indicate a relative position relationship between the object and the robotic arm, and the image processing result directly carries the position information of the center of mass of the object in the direction of the second rotation axis. Further, the image processing result includes positions of the object at two timestamps, a quotient of the position of the object and a time difference is determined as the offset velocity of the object in the first direction or the second direction, and the time difference is a time difference between the two timestamps included in the image processing result.

Implementation 3: Data fusion based on a visual sensor and a tactile sensor.

Exemplarily, this implementation corresponds to that in the embodiment shown in FIG. 9, operation 522 may be implemented as sub-operation 26.

**Sub-operation 26:** Acquire the third state based on a visual sensor and a tactile sensor.

Sub-operation 25 or sub-operation 26 is performed, and the two-sub-operations cannot be simultaneously performed.

In all embodiments of the present disclosure, the third state is obtained based on the visual sensor and the tactile sensor. For processing of the visual sensor, refer to the foregoing content, and for processing of the tactile sensor, refer to the following content.

According to the foregoing content, in a case that the lightweight data image processing method is applied, a relatively large error may exist in a depth direction (that is, the direction of the x axis shown in FIG. 8) of a camera. Based on this, the tactile sensor may be configured to compensate for the error. For example, the tactile sensor is arranged on the housing of the robotic arm, to collect a corresponding tactile signal when the object is placed on the robotic arm. Based on this, a specific position of the object in the y direction of the first link can be accurately obtained.

In all embodiments of the present disclosure, sub-operation 26 may be implemented as follows: acquiring at least two images of the robotic arm with the object positioned on the robotic arm by the visual sensor; and determining the first offset and the first offset velocity according to the at least two images; determining a fourth position of the object on the first link at a first moment from the tactile sensor; determining a fifth position of the object on the first link at a second moment from the tactile sensor, the first moment and the second moment are separated by a first pre-set duration; determining the second offset velocity based on the first pre-set duration and a difference between the fourth position and the fifth position; determining the second offset from a difference between the fifth position and a pre-set position of the center of mass of the first link. According to the second mapping relationship and the third mapping relationship, the three-dimensional coordinates of a center of mass of the object and the center of mass of the first link may be obtained. The first offset and the first offset velocity may be obtained from the three-dimensional coordinates of a center of mass of the object and the center of mass of the first link of at least two images. In all embodiments of the present disclosure, the tactile sensor is arranged on the housing of the robotic arm and may serve an electronic skin of the robotic arm. In all embodiments of the present disclosure, a position and a pitch angle posture of the object in the y direction may be recorded in contact information of the object and the robotic arm that is collected by the tactile sensor. In addition, with reference to lightweight image processing of the visual sensor, the specific position of the object in the y direction of the robotic arm may be determined through comparison with prior picture data.

In all embodiments of the present disclosure, operating time of the tactile sensor in this implementation is approximately 10 milliseconds, namely, 10 Hz. With reference to the foregoing content, a comparison of the three implementations is provided, as shown in the following table:

| Solution | Operating period | Linear error | Angle error |
|---|---|---|---|
| Implementation 1 | 100 ms | 1-2 cm | 5-10° |
| Implementation 2 | 10 ms | 1 cm | 5° |

(continued)

| Solution | Operating period | Linear error | Angle error |
|---|---|---|---|
| Implementation 3 | 10 ms | 1 cm | 5° |

The position of the object on the robotic arm that is determined by Implementation 1 has a linear error of 1 to 2 centimeters and an angle error of 5 to 10 degrees, that is, the obtained third state has a linear error and an angle error. Similarly, Implementation 2 and Implementation 3 also lead to errors. Still further, Implementation 3 is an improved implementation based on Implementation 2, and can overcome a disadvantage of inaccurate measurement for the center of mass in the direction of the y axis of Implementation 2, whereby an error of the obtained third state is smaller.

If the robotic arm control method provided in this application is adopted, an appropriate implementation may be selected according to actual requirements, to acquire the third state. This is not limited in this application. In all embodiments of the present disclosure, sub-operation 26 may be implemented as follows: the first information comprising the first offset and the first offset velocity is determined based on the visual sensor; the second information comprising the second offset and the second offset velocity is determined based on the tactile sensor; and the first information and the second information are combined, to obtain the third state.

In all embodiments of the present disclosure, determination of the second information is specifically implemented as follows: position information of a contact point between the object and the robotic arm relative to the robotic arm is determined by using the tactile sensor.

The position information determined in this manner at least includes coordinates of a contact position between the object and the robotic arm. For related content of for acquiring the position information by the tactile sensor, refer to the foregoing content. Details are not described herein again. In some embodiments, the tactile sensor is arranged on the housing of the robotic arm and configured to acquire the contact position between the object and the robotic arm.

Refer to the foregoing content. The first information is data of visual perception, and the second information is data of tactile perception. The foregoing two pieces of data may be combined. In an embodiment, fusion is performed by using any one or more of the following algorithms: a Kalman filtering (KF) algorithm, an extended Kalman filtering (EKF) algorithm, and a particle filter (PF) algorithm.

There are a plurality of implementations of data fusion. The foregoing content is merely an example, and does not constitute a limitation on this application. In addition, as the fusion method is updated, fusion methods that are developed after this application are also applicable to this application, that is, a fusion result does not limit the robotic arm control method provided in this application.

In conclusion, according to the method provided in this embodiment, a new method for using a robotic arm is provided. The robotic arm can first throw the object, receive the object at any position, and re-balance the object. The third state is determined based on the visual sensor or based on the visual sensor and the tactile sensor. A plurality of methods for acquiring the third state are provided. Therefore, a method for controlling a robotic arm to throw and receive an object at any position and maintain the balance of the object is developed.

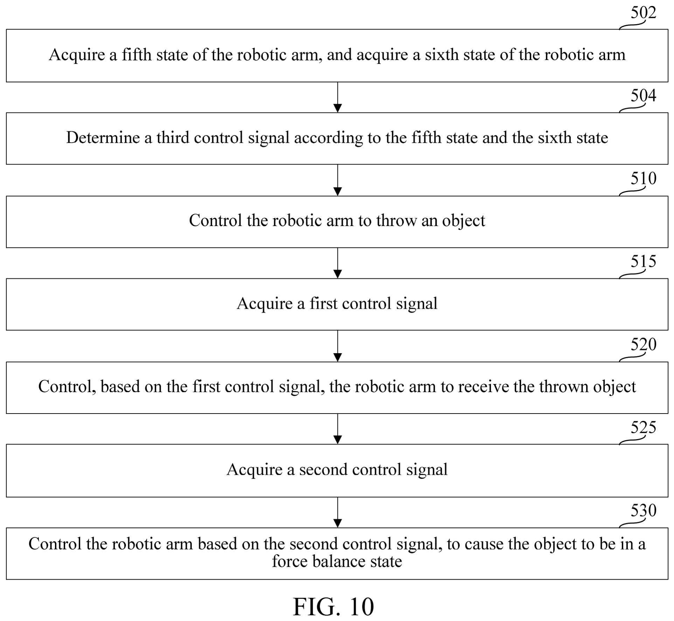

FIG. 10 is a flowchart of a robotic arm control method according to an exemplary embodiment of this application. The method may be performed by a controller of a robotic arm. That is, based on the embodiment shown in FIG. 4, the method further includes operation 502 and operation 504.

**Operation 502:** Acquire a fifth state of the robotic arm and acquire a sixth state of the robotic arm.

In all embodiments of the present disclosure, the fifth state may be configured to indicate a pre-set angle and a pre-set angular velocity of each of the at least one joint when the object is separated from the object. The sixth state may be configured to indicate a third angle and a third angular velocity of each of the at least one joint before controlling the robotic arm to throw the object. For example, the sixth state is acquired at a moment for performing the operation 502. In all embodiments of the present disclosure, the fifth state may indicate that the robotic arm lifts up in a pitch direction, to enable the object to obtain the vertical upward velocity.

**Operation 504:** Determine a third control signal according to the fifth state and the sixth state.

In all embodiments of the present disclosure, the fifth state may be determined from the pre-set pose and the pre-set velocity of the contact point between the robotic arm and the object, when the object is separated from the contact point. For example, the contact point may be the first point at the first position. The expected pose and the expected velocity of the object for separating from the robotic arm are identical to the pre-set pose and the pre-set velocity of the contact point, respectively. In other words, the expected pose and the expected velocity of the object may be determined from the pre-set pose and the pre-set velocity of the contact point. The pose of the first point may be determined from an angular of each joint of the robotic arm, by the preset kinematic model. The velocity of the first point of the robotic arm may be determined from an angular velocity of each joint of the robotic arm, by the preset Jacobian Matrix. The preset kinematic model represents relationship between the pose of the first point for throwing the object and the angular of each joint of the robotic arm. The preset Jacobian Matrix represents relationship between the velocity of the first point and the angular velocity of each joint of the robotic arm. The third control signal is configured to control the robotic arm to move from the sixth state to the fifth state. In all embodiments of the present disclosure, the robotic arm control method provided is implemented by a PID controller. Exemplarily, the robotic arm is control to move based on a state sequence of the contact point. Each state of the state sequence is used to determine a state of the contact point and includes a pose and a velocity of the contact point. The state sequence is a sequence changing with time. In other words, each state is associated with a moment (i.e., a timestamp). Exemplarily, a difference between a state at a first moment in the state sequence and a state of the robotic arm at the first moment is used to determine a fourth control torque for each joint of the robotic arm at the first moment.

In all embodiments of the present disclosure, the third current state includes an angle and an angular velocity of the robotic arm rotating around a rotation axis. Correspondingly, the fifth state includes an expected angle and an expected angular velocity of the robotic arm rotating around the rotation axis. Refer to FIG. 8. There may be at least one rotation axis in the x direction, the y direction, or the z direction. For a specific method for determining the third control signal for the robotic arm, refer to the formulae of the PID controller in sub-operation 12. Exemplarily, the fifth state includes that within a first time period (such as 0.1 s), values of a joint angle 4 and a joint angle 5 (elbow joints of a forearm) are decreased from an initial value of a preparatory posture to 0 degree, a joint angle 3 is moved from 1.57 radians to 1.37 radians, and values of other joint angles remain unchanged. The third control signal is determined according to the sixth state and the fifth state with reference to the formulae of the PID controller in sub-operation 12.

In all embodiments of the present disclosure, according to the third control signal, the robotic arm is controlled to throw the object.

After the third control signal is determined, the robotic arm may be controlled according to the third control signal. The third control signal is configured to control the robotic arm to move to the fifth state. By controlling robotic arm to move, the object is separated from the robotic arm. Further, the third control signal may be a control signal for one or more rotation axes. The third control signal is usually configured to control motions of the robotic arm by controlling a torque. Even if the third control signal is configured to control the robotic arm to enable the object to obtain the vertical upward velocity, the case that the object obtains a velocity component in any direction on a plane perpendicular to the vertical direction is not excluded. Specifically, in a case that a first arm throws up the object, and a second arm catches the thrown object at any position other than an end, the object obtains a velocity component in any direction on the plane perpendicular to the vertical direction, and according to the velocity component, the object is thrown up by the first arm and moves toward the second arm. In this way, the second arm catches the object in the air. Refer to FIG. 8. The third control signal may be a control signal for at least one rotation axis in the x direction, the y direction, or the z direction.

In all embodiments of the present disclosure, before operation 512, the method further includes the following operations: a seventh state of the robotic arm is acquired; and a fourth control signal is determined for the robotic arm according to a seventh state and the eighth state of the robotic arm.

In all embodiments of the present disclosure, the seventh state is configured to indicate posture information of the robotic arm that is in contact with the object and obtains a vertical downward velocity. The eighth state is a state of the robotic arm at a current time. Exemplarily, before the robotic arm is separated from the object, to enable the three-dimensional to obtain the vertical upward velocity, the robotic arm obtains the vertical downward velocity, which enables the robotic arm to obtain moving space, and enables the object to obtain an increased vertical upward velocity. The seventh state includes an expected angle and an expected angular velocity of the robotic arm rotating around the rotation axis. Similarly, the seventh state may be implemented as a state sequence, such as a sequence changing with time. Exemplarily, a difference between the eighth state and the seventh state is configured to indicate a difference between a current state and a state of the robotic arm that is in contact with the object and obtains the vertical downward velocity. The difference is configured to indicate that the fourth control signal is determined by taking the eighth state as a reference, and taking the seventh state as a motion target. The fourth control signal is configured to control the robotic arm to move to the seventh state from the eighth state. By controlling the robotic arm to move, the object is in contact with the robotic arm, and the robotic arm obtains the vertical downward velocity.

For a specific method for determining the third control signal for the robotic arm, refer to the formulae of the PID controller in sub-operation 12. Exemplarily, the seventh state includes that within a second time period (such as 0.2 s), values of a joint angle 4 and a joint angle 5 (elbow joints of the forearm) are increased from 0 degree to a value (such as 0.5 radians) greater than an initial value of a preparatory posture, a joint angle 1 is rotated from an initial angle to a preset value (such as 0.3 radians), a joint angle 3 is moved from 1.37 radians to 1.17 radians, and values of other joint angles remain unchanged. The third control signal is determined according to the eighth state and the seventh state with reference to the formulae of the PID controller in sub-operation 12. In addition, the foregoing joint angles are determined based on the robotic arm with 7 degrees of freedom in FIG. 1, that is, an included angle between two movable members of a shoulder joint upper arm is the joint angle 1, and an included angle between two movable members at the end of the robotic arm is a joint angle 7. Joint angles in the following descriptions are all determined based on the robotic arm with 7 degrees of freedom in FIG. 1, and are not further described below.

Operation 510 may be implemented as follows: the robotic arm is controlled to throw the object according to the third control signal and the fourth control signal.

In all embodiments of the present disclosure, the third control signal is configured to control the robotic arm to be separated from the object, to enable the object to obtain the vertical upward velocity. The fourth control signal is configured to control the robotic arm to be in contact with the object and obtain the vertical downward velocity. Exemplarily, first, the robotic arm is controlled, according to the fourth control signal, to be in contact with the object and obtain the vertical downward velocity; and then, the robotic arm is controlled, according to the third control signal, to be separated from the object, to enable the object to obtain the vertical upward velocity. In this way, when the object is separated from the robotic arm, the object is thrown up at an increased velocity. Exemplarily, first, the fourth control signal controls the robotic arm to move to the seventh state from the eighth state. After the robotic arm moves to the seventh state, the third control signal controls the robotic arm to move to the fifth state from the current state (that is the seventh state). By controlling the robotic arm to move, the object is separated from the robotic arm. Exemplarily, the action of throwing up the object of the robotic arm is implemented as follows: first, the robotic arm is controlled, according to the fourth control signal, to be in contact with the object and obtain the vertical downward velocity, and then, the robotic arm is controlled, according to the third control signal, to be separated from the object, to enable the object to obtain the vertical upward velocity.

In conclusion, according to the method provided in all embodiments, a new method for using a robotic arm is provided. The robotic arm can first throw the object, receive the object, and re-balance the object. The controller controls the robotic arm, that is, determines the third control signal according to the sixth state and the fifth state of the robotic arm, and controls the robotic arm to throw the object. Therefore, a method for controlling a robotic arm to throw and receive the object at any position other than an end and maintain the balance of the object is developed.

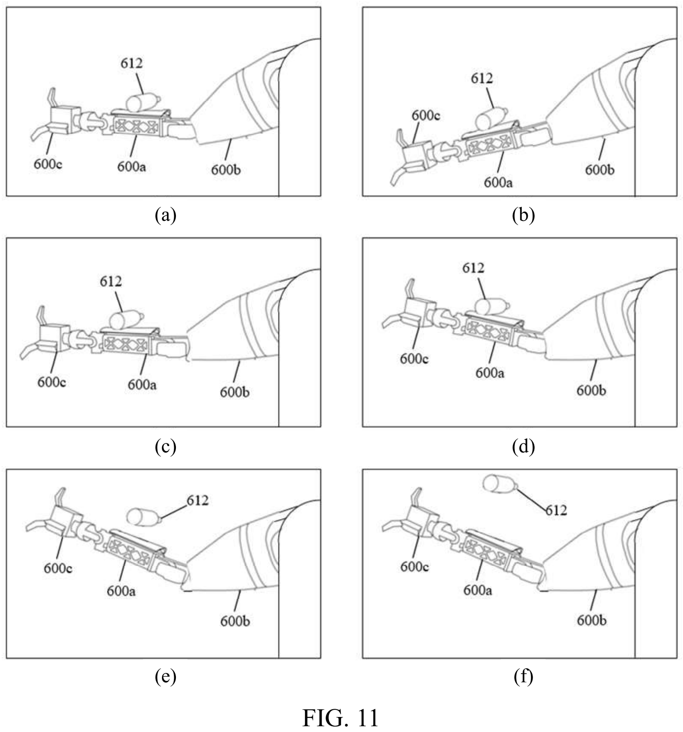

FIG. 11 is a schematic diagram of a robotic arm and an object according to an exemplary embodiment of this application. FIG. 11 includes a sub-graph a to a sub-graph f, which show six timestamps in a process in which the robotic arm throws up a object 612. Exemplarily, in sub-graph a, the object 612 is placed on a forearm 600a of the robotic arm, and the robotic arm further includes an upper arm 600b of the robotic arm. For descriptions about the forearm arm and the upper arm of the robotic arm, refer to the related descriptions to sub-operation 16b, operation 604, and FIG. 3, which are not shown herein again. In sub-graph b, the forearm 600a performs pitching motion, and rotates about an elbow joint, to lower an end 600c of the robotic arm. In sub-graph c, the forearm 600a of the robotic arm performs pitching motion, and rotates about the elbow joint, to lift the end 600c of the robotic arm. In sub-graph d, the forearm 600a of the robotic arm rotates about the elbow joint, and the upper arm 600b of the robotic arm rotates about a shoulder joint, to further lift the end 600c of the robotic arm. Exemplarily, sub-graph d corresponds to a timestamp before the object 612 is separated from the robotic arm. In sub-graph e, the object 612 is separated from the robotic arm, and the object 612 is thrown up. In sub-graph f, the object 612 reaches a highest point.

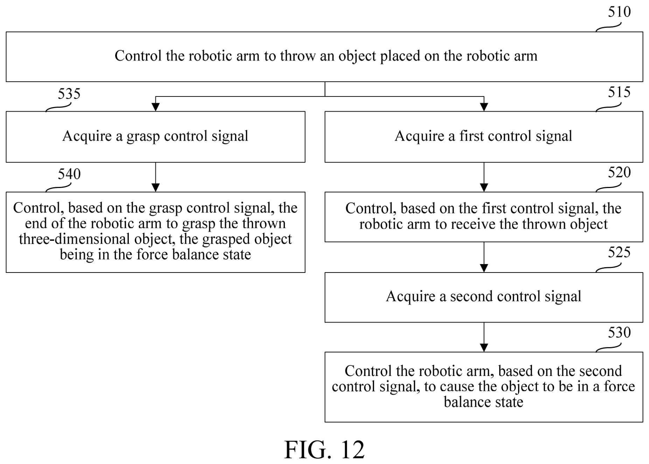

FIG. 12 is a flowchart of a robotic arm control method according to an exemplary embodiment of this application. The method may be performed by a controller of a robotic arm. That is, based on the embodiment shown in FIG. 4, the method further includes operation 535 and operation 540.

**Operation** 535: Acquire a grasp control signal.

In all embodiments of the present disclosure, the grasp control signal is configured to control the end of the robotic arm to grasp the object. In an embodiment, the grasp control signal controls the robotic arm to move with reference to the motion trajectory information of the object. Further, the end of the robotic arm may be stationary relative to the object. Moreover, the end of the robotic arm is controlled to close, and the object is grasped by using a robotic hand deployed at the end of the robotic arm. Similar to the first control signal, a method for acquiring the grasp control signal is not limited in this application.

**Operation 540:** Control, based on the grasp control signal, the end of the robotic arm to grasp the thrown object. The grasped object is in the force balance state.

In all embodiments of the present disclosure, the end of the robotic arm performs prehensile manipulation on the object. The end of the robotic arm is a robotic hand that can open or close. The object reaches the force balance state, and the end of the robotic arm grasps the object, to form at least one of form closure and force closure for the object. Further, prehensile manipulation restricts motions of the object. Through contact between the end of the robotic arm and the object, the object is stationary relative to the end of the robotic arm, or the object moves relative to the robotic arm but is not separated from the end of the robotic arm. Exemplarily, the grasp control signal is configured to control the robotic arm to move to the sixth position. The motion trajectory of the end of the robotic arm intersects with the parabolic trajectory of the object at the sixth position. In all embodiments of the present disclosure, the sixth position may be determined from the parabolic trajectory of the object. For example, a first duration of the object's movement in the air is pre-set. a the first duration may be a time duration between a moment when throwing the object and the other moment when receiving the object. According to the first duration and the parabolic trajectory of the object, the sixth position may be determined. In this way, a motion target of controlling the end of the robotic arm to grasp the thrown object is achieved.

In all embodiments of the present disclosure, before operation 535, the method further includes the following operation: acquiring motion trajectory information of the object, the motion trajectory information comprising a parabolic trajectory of the object after the object is separated from the robotic arm; acquiring a second motion trajectory of the robotic arm, along which the robotic arm is control to move, according to the motion trajectory information of the object; acquiring a second motion sequence of the robotic arm according to the second motion trajectory, the second motion sequence comprising multiple second motion states of the robotic arm at multiple control moments during movement of the robotic arm along the second motion trajectory, each second motion state at the respective control moment indicating a velocity and a pose of the robotic arm at the respective control moment. The second motion trajectory may be the motion trajectory of the end of the robotic arm. Each of the second motion states may be a velocity and a pose of the end of the robotic arm at the respective control moment.

In all embodiments of the present disclosure, the grasp control signal at each control moment is determined according to the first state of the robotic arm and the motion trajectory information of the object. Exemplarily, the robotic arm comprises at least one joint. The acquiring a grasp signal comprises: determining a first state of the robotic arm according to at each control moment of the object, the first state being configured to indicate a first angle and a first angular velocity of each of the at least one joint; and acquiring a second state of the robotic arm, the second state indicating a second angle and a second angular velocity of each of the at least one joint at the respective control moment ; determining the grasp signal according to the first state and the second state.

In all embodiments of the present disclosure, for a method for acquiring the motion trajectory information, refer to operation 512. In all embodiments of the present disclosure, the motion trajectory information may be predicted from the pose and velocity of the object when the object is separated from the robotic arm. The pose of the object includes the position and the posture of the object. The position of the object may be a position of a center of mass of the object, or a position of a pre-set point on the object or in the object. At the moment when the object is separated from the robotic arm, the pose and velocity of a first point of the robotic arm at the first position, from which the object is separated, can be considered the same as those of the object. The first point of the robotic arm, for example, may be a point of a forearm or an upper arm and contact with the object. The pose of the first point may be determined from an angular of each joint of the robotic arm, by the preset kinematic model. The velocity of the first point of the robotic arm may be determined from an angular velocity of each joint of the robotic arm, by the preset Jacobian Matrix. The grasp control signal is configured to control the end of the robotic arm to grasp the object. The first state of the robotic arm is configured to indicate posture and position of the robotic arm at a current timestamp. For example, the posture is described by using at least one of an angle and an angular velocity of the robotic arm.

The grasp control signal includes information that instructs the robotic arm to move with reference to the motion trajectory information of the object, and controls motion of performing prehensile manipulation on the object of the end of the robotic arm. Exemplarily, for the information that instructs the robotic arm to move with reference to the motion trajectory information of the object, refer to operation 524. A control signal configured to control the motion of performing prehensile manipulation on the object of the end of the robotic arm is determined according to a shape feature of the object. For example, the control signal configured to control the robotic arm to perform prehensile manipulation is determined according to information such as a size or a radian of the object. In some embodiments, the robotic arm control method provided in the embodiments of this application is implemented by a PID controller. For a specific implementation, refer to operation 12.

In conclusion, according to the method provided in this embodiment, a new method for using a robotic arm is provided. The robotic arm can first throw the object, and then grasp the object with the end. The controller controls the robotic arm to implement the action of throwing and catching the object. Therefore, a method for controlling a robotic arm to throw and receive an object at any position other than an end and maintain the balance of the object is developed.

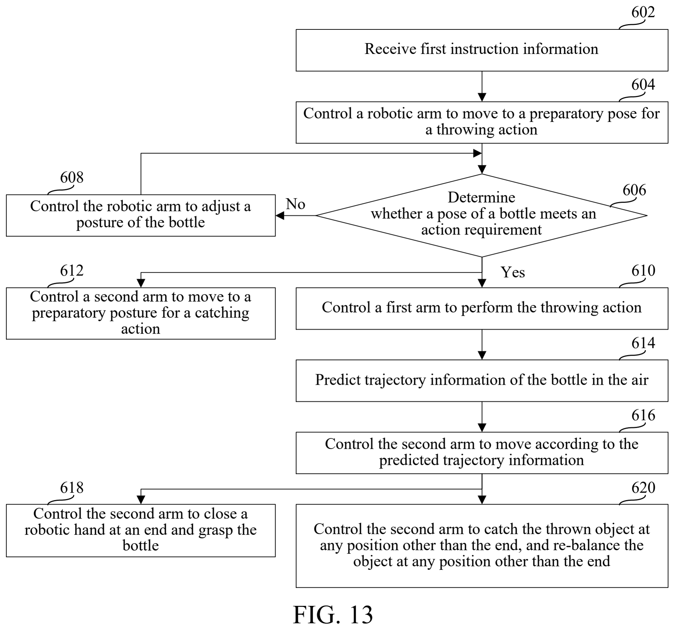

FIG. 13 is a flowchart of a robotic arm control method according to an exemplary embodiment of this application. The method may be performed by a controller of a robotic arm. The method includes:

**Operation 602:** Receive first instruction information.

In all embodiments of the present disclosure, in a case that the first instruction information is not received, the robotic arm continuously waits for a user instruction in a preset instruction preparatory pose. The first instruction information may be transmitted by an input device such as a voice, a gesture, a keyboard, or a remote control. The first instruction information may be obtained through AI-based cluster analysis and pattern recognition of a voice and a gesture, or may be obtained through instruction signal transmission and parsing.

The first instruction information is configured for instructing the robotic arm to throw a object (such as a bottle) and then catch the thrown object in the air.

**Operation 604:** Control a robotic arm to move to a preparatory pose for a throwing action.

The robotic arm is controlled to move to a preparatory pose in which a forearm throws a bottle, and the preparatory pose is a preset pose of the robotic arm. Exemplarily, the preparatory pose is convenient for the forearm to start the action of throwing the bottle at any time, and is a safe and stable pose for the robotic arm.

Specifically, an initial pose may be set as that a first arm of a dual-robotic-arm platform straightens and points to the right front, at the same time, a joint 1 (a shoulder joint of an upper arm) moves downward, a joint 4 and a joint 5 (elbow joints of a forearm) move upward, a rigid body of the forearm remains substantially parallel to the ground, and a distance between the forearm and the ground is less than a distance between the shoulder joint and the ground.

**Operation 606:** Determine whether a pose of a bottle meets an action requirement.

In all embodiments of the present disclosure, in a case that the pose of the bottle does not meet the action requirement, operation 608 is performed; and in a case that the pose of the bottle meets the action requirement, operation 610 and operation 612 are performed.

In all embodiments of the present disclosure, whether the pose of the bottle meets the action requirement is determined, and the action requirement is a requirement for a throwing action, which is obtained through planning in a dynamic model including the robotic arm and the bottle, or is preset. For example, the bottle is parallel to the ground, the bottle is perpendicular to the forearm of the robotic arm, a contact point between the bottle and the forearm is located at a side, close to the elbow joint, of an edge of the forearm, and the contact point between the bottle and the forearm is located at one-third of a side, close to the elbow joint, of the forearm.

**Operation 608:** Control the robotic arm to adjust a pose of the bottle in a case that the pose of the bottle does not meet the action requirement.

In all embodiments of the present disclosure, after operation 608 is performed, operation 606 is performed, to re-determine whether the pose of the bottle meets the action requirement. Exemplarily, in a case that the pose of the bottle does not meet the action requirement, the robotic arm is controlled to move, to indirectly adjust the pose of the bottle until the pose of the bottle meets the action requirement.

**Operation 610:** Control a first arm to perform the throwing action in a case that the pose of the bottle meets the action requirement.

In all embodiments of the present disclosure, the description is made by taking the dual-robotic-arm platform as an example. In another implementation, all operations in this embodiment are implemented by one robotic arm. Exemplarily, the first arm is controlled to perform the throwing action, the bottle placed on the forearm of the first arm obtains an upward velocity, has a velocity after being separated from an upper surface of the forearm, and continues to move upward. In a process in which the forearm is in contact with the bottle to interact with each other, that is, before the forearm is separated from the bottle, the bottle may slide on the forearm, does not fall off the upper surface of the forearm during sliding, and does not slide out of a front-rear range of the forearm due to an excessively large moving velocity and an excessively long moving distance. After being thrown in the air, the bottle may have a velocity in a forward direction of the forearm and a velocity in a direction from the first arm to a second arm, or may have an own rotation velocity of the bottle.

In all embodiments of the present disclosure, the throwing action performed by the first arm includes: starting from a preparatory pose of the robotic arm, within a first moment period (such as 0.1 s), values of a joint angle 4 and a joint angle 5 (elbow joints of a forearm) are decreased from initial values of the preparatory pose to 0 degree, a joint angle 3 is moved from 1.57 radians to 1.37 radians, and values of other joint angles remain unchanged; and within a second moment segment (such as 0.2 s), the values of the joint angle 4 and the joint angle 5 (the elbow joints of the forearm) are increased from 0 degree to values (such as 0.5 radians) greater than the initial values of the preparatory pose, a joint angle 1 is rotated from an initial angle to a preset value (such as 0.3 radians), the joint angle 3 is moved from 1.37 radians to 1.17 radians, and values of other joint angles remain unchanged.

**Operation 612:** Control a second arm to move to a preparatory pose for a grasp action in a case that the pose of the bottle meets the action requirement.

In all embodiments of the present disclosure, the preparatory pose is convenient for the second arm to start the action of grasping the bottle at any time, and is a safe and stable pose for the second arm.

**Operation 614:** Predict trajectory information of the bottle in the air.

In all embodiments of the present disclosure, after the bottle is separated from the forearm, trajectory information in a world coordinate system or relative to a center of mass coordinate system of the first arm after the bottle is thrown is predicted based on time sequence information of a tactile pose and force magnitude before the forearm is separated from the bottle, a joint angle, a velocity, and current information of the robotic arm, and visual sensing information.

**Operation 616:** Control the second arm to move according to the predicted trajectory information.

In all embodiments of the present disclosure, according to the trajectory information of the bottle in the air, the second arm moves toward a moving position and direction of the bottle, and moves at a speed similar to that of the bottle when the second arm is close to the position of the bottle. A time sequence of a position and a pose of the second arm is planned according to the trajectory information of the bottle in the air. The second arm is controlled to move based on the time sequence.

**Operation 618:** Control the second arm to close a robotic hand at an end and grasp the bottle.

In all embodiments of the present disclosure, the second arm grasps the bottle with the robotic hand at the end. According to the time sequence obtained based on the trajectory information of the bottle in the air, when the bottle approaches a palm, a position of each joint angle of the robotic hand is controlled to control the robotic hand to switch from an open pose to a closed pose. In this way, the robotic arm completes the action of grasping the flying bottle.

**Operation 620:** Control the second arm to catch the thrown object at any position other than the end, and re-balance the object at any position other than the end.

The second arm performs nonprehensile manipulation on the object at any position other than the end. Contact between any position on the second arm other than the end and the object does not constitute at least one of form closure and force closure for the object. The object is re-balanced on the second arm. In this operation, an objective of controlling the second arm is to ensure that the object is in a balance state on the second arm, and always in balance on the second arm without falling.

In conclusion, according to the method provided in this embodiment, a new method for using a robotic arm is provided. The robotic arm can first throw the object, catch the object at any position other than the end, and re-balance the object. The controller controls the robotic arm to implement the action of throwing and catching the object. Therefore, a method for controlling a robotic arm to throw and receive an object at any position other than an end and maintain the balance of the object is developed.

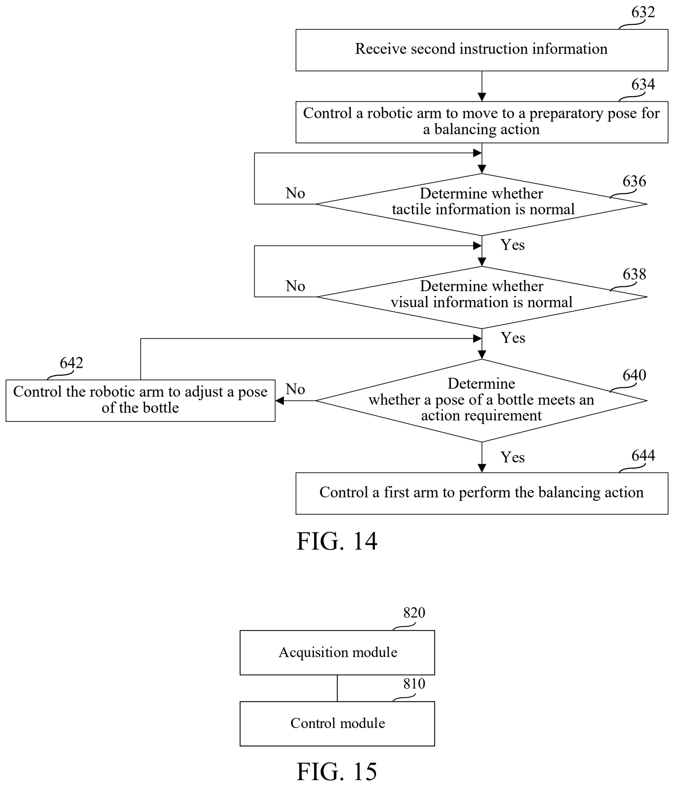

FIG. 14 is a flowchart of a robotic arm control method according to an exemplary embodiment of this application. The method may be performed by a controller of a robotic arm. The method includes:

**Operation 632:** Receive second instruction information.

In all embodiments of the present disclosure, in a case that the second instruction information is not received, the robotic arm continuously waits for a user instruction in a preset instruction preparatory pose. The second instruction information may be transmitted by an input device such as a voice, a gesture, a keyboard, or a remote control. The second instruction information may be obtained through AI-based cluster analysis and pattern recognition of a voice and a gesture, or may be obtained through instruction signal transmission and parsing. The second instruction information is configured for instructing the robotic arm to balance an object (such as a bottle) placed at any position on the robotic arm other than an end.

**Operation 634:** Control the robotic arm to move to a preparatory pose for a balancing action.

The robotic arm is controlled to move to a preparatory pose in which a forearm throws a bottle, and the preparatory pose is a preset pose of the robotic arm. Exemplarily, the preparatory pose is convenient for the forearm to start the action of balancing the bottle at any time, and is a safe and stable pose for the robotic arm.

Specifically, an initial pose may be set as that a first arm of a dual-robotic-arm platform straightens and points to the right front.

**Operation 636:** Determine whether tactile information is normal.

In all embodiments of the present disclosure, in a case that it is determined that the tactile information is abnormal, this operation is repeatedly performed until normal tactile information is acquired. Cases of abnormal tactile information include that no tactile signal is received, and a received tactile signal is abnormal.

**Operation 638:** Determine whether visual information is normal in a case that it is determined that the tactile information is normal.

Exemplarily, in a case that it is determined that the visual information is abnormal, this operation is repeatedly performed until normal visual information is acquired. Cases of abnormal visual information include that no visual signal is received, and a received visual signal is abnormal.

**Operation 640:** Determine whether a pose of a bottle meets an action requirement in a case that it is determined that the visual information is normal.

The pose of the bottle is determined through fusion of the received visual information and the received tactile information, and is configured to indicate a position and posture of the bottle on the robotic arm. Exemplarily, the action requirement is a requirement for maintaining the bottle stationary on the robotic arm, and the action requirement is obtained through planning in a dynamic model including the robotic arm and the bottle, or is preset. Exemplarily, when the bottle is in a relatively unstable state, the pose of the bottle does not meet the action requirement. For descriptions about the relatively unstable state of the bottle, refer to sub-operation 21. Details are not described herein again.

**Operation 642:** Control the robotic arm to adjust a pose of the bottle in a case that the pose of the bottle does not meet the action requirement.

In all embodiments of the present disclosure, in a case that the pose of the bottle does not meet the action requirement, the robotic arm is controlled to move, to indirectly adjust the pose of the bottle until the pose of the bottle meets the action requirement. Exemplarily, by controlling the robotic arm to adjust the pose of the bottle until the pose of the bottle meets the action requirement, the bottle in the relatively unstable state is first adjusted to be detached from the relatively unstable state, and then the first arm is controlled to perform the balancing action, to maintain the bottle stationary on the robotic arm.

**Operation 644:** Control a first arm to perform the balancing action in a case that the pose of the bottle meets the action requirement.

In all embodiments of the present disclosure, the balancing action performed by the first arm includes: the object is expected to be in a static balance state, that is, the object is stationary on the robotic arm. The object is expected to be in a dynamic balance state, that is, the object moves or rolls on the robotic arm without falling.

Further, an action performed by the robotic arm may include, but is not limited to, at least one of the following: grasping, throwing, and catching actions of a robotic hand at the end of the robotic arm, actions of inserting into a hole, installing and removing a screw, and mounting and assembling of an end tool of the robotic arm, actions of opening a door, closing a door, and grasping an object on a desktop and in a working space of the robotic hand at the end of the robotic arm, and the like.

In conclusion, the embodiments of this application provide a new method for using a robotic arm, to balance an object at any position on the robotic arm other than an end without falling. A control signal can be determined for the robotic arm according to posture information and expected state information of a dynamic system constructed based on the robotic arm and the object, to control the robotic arm.

Those of ordinary skill in the art may understand that the foregoing embodiments may be implemented independently, or the foregoing embodiments may be combined in different manners to form new embodiments for implementing the robotic arm control method of this application.

FIG. 15 is a block diagram of a robotic arm control apparatus according to an exemplary embodiment of this application. An object is placed a first position on a robotic arm, and the apparatus includes: a control module 810, configured to perform operation 510 in the embodiment in FIG. 4; and an acquisition module 820, configured to perform operation 515 in the embodiment in FIG. 4. The control module 810 is further configured to perform operation 520 in the embodiment in FIG. 4. The acquisition module 820 is further configured to perform operation 525 in the embodiment in FIG. 4. The control module 810 is further configured to perform operation 530 in the embodiment in FIG. 4.

In all embodiments of the present disclosure, the robotic arm includes a first arm; and the control module 810 is further configured to:

control the first arm to throw the object;

control, based on a first control signal, the first arm to receive the thrown object; and

control the first arm based on a second control signal, to cause the object to be in the force balance state.

In all embodiments of the present disclosure, the robotic arm includes a first arm and a second arm that move independently of each other; and the control module 810 is further configured to:

control the first arm to throw the object;

control, based on a first control signal, the second arm to receive the thrown object; and

control the second arm based on a second control signal, the second arm to cause the object to be in the force balance state.

In all embodiments of the present disclosure, the acquisition module 820 is further configured to perform operation 512 in the embodiment in FIG. 7. Motion trajectory information includes a parabolic trajectory of the object after the object is separated from the robotic arm. The first control signal is determined according to a first current state of the robotic arm and the motion trajectory information of the object.

In all embodiments of the present disclosure, the acquisition module 820 is further configured to:

determine a first state of the robotic arm according to the motion trajectory information of the object, the first state being configured to indicate a first angle and a first angular velocity of each of the at least one joint for receiving the thrown object;

acquire a second state of the robotic arm, the second state indicating a second angle and a second angular velocity of each of the at least one joint at a current time;

determine the first control signal according to the first state and the second state.

In all embodiments of the present disclosure, the acquisition module 820 is further configured to:
determine a first control torque for each of the at least one joint according to a first difference between the first angle of the respective joint and the second angle of the respective joint, and a second difference between the first angular velocity of the respective joint and the second angular velocity of the respective joint.

In all embodiments of the present disclosure, the acquisition module 820 is further configured to:

acquire a third state after the first arm receiving the thrown object, the third state comprising at least one of the following: (i) a first offset and a first offset velocity, and (ii) a second offset and a second offset velocity; the first offset being an offset of a center of mass of the object relative to a center of mass of a first link in a first direction, the first direction being a direction along which the first link extends, the first offset velocity being an offset velocity of the center of mass of the object relative to the center of mass of the first link in the first direction, the second offset being an offset of a center of mass of the object relative to a center of mass of a first link in a second direction, the second direction being a horizontal direction perpendicular to the first link, the second offset velocity being an offset velocity of the center of mass of the object relative to the center of mass of the first link in the second direction, the first link being a link of the robotic arm for receiving the thrown object; and/or

acquire a fourth state for causing the object to be in a force balance state, the fourth state comprising at least one of the following: (iii) a first pre-set offset and a first pre-set offset velocity of the center of mass of the object relative to the center of mass of the first link in the first direction, and (iv) a second pre-set offset and a second pre-set offset velocity of the center of mass of the object relative to the center of mass of the first link in the second direction.

In all embodiments of the present disclosure, the acquisition module 820 is further configured to: determine the second control signal according to a difference between the fourth state and the third state.

In all embodiments of the present disclosure, the acquisition module 820 is further configured to: determine a second control torque, for controlling the first link rotating around a first rotation axis in the second direction, according to a third difference between the first pre-set offset and the first offset, and a fourth difference between the first pre-set offset velocity and the first offset velocity. The acquisition module 820 is further configured to: determine a third control torque, for controlling the first link rotating around a second rotation axis in the first direction, according to a fifth difference between the second pre-set offset and the second offset, and a sixth difference between the second pre-set offset velocity and the second offset velocity.

In all embodiments of the present disclosure, the acquisition module 820 is configured to:

acquire the third state based on a visual sensor; or

acquire the third state based on the visual sensor and a tactile sensor.

In all embodiments of the present disclosure, the acquisition module 820 is further configured to:

acquiring at least two images of the robotic arm with the object positioned on the robotic arm by the visual sensor; and

determining the third state according to the at least two images.

In all embodiments of the present disclosure, the acquisition module 820 is further configured to: acquire at least two images of the robotic arm with the object positioned on the robotic arm by the visual sensor; and determine the first offset and the first offset velocity according to the at least two images. The acquisition module 820 is further configured to: determining a fourth position of the object on the first link at a first moment from the tactile sensor; determine a fifth position of the object on the first link at a second moment from the tactile sensor, the first moment and the second moment are separated by a first pre-set duration; determine the second offset velocity based on the first pre-set duration and a difference between the fourth position and the fifth position; determine the second offset from a difference between the fifth position and a position of the center of mass of the first link.

In all embodiments of the present disclosure, the acquisition module 820 is further configured to perform operation 502 in the embodiment in FIG. 10. A fifth state is configured to indicate a pre-set angle and a pre-set angular velocity of each of the at least one joint when the object is separated from the object.

In all embodiments of the present disclosure, the acquisition module 820 is further configured to perform operation 504 in the embodiment in FIG. 10. The action of throwing up the object of the robotic arm is controlled based on a third control signal.

In all embodiments of the present disclosure, the acquisition module 820 is further configured to:

acquire a seventh state of the robotic arm, the seventh state being configured to indicate posture information of the robotic arm that is in contact with the object and obtains a vertical downward velocity; and

determine a fourth control signal for the robotic arm according to a eighth state and the seventh state of the robotic arm. The eighth state is a state of the robotic arm at a current time.

The control module 810 is further configured to: control, according to the third control signal and the fourth control signal, the robotic arm to throw the object. The third control signal is configured to control the robotic arm to be separated from the object, to enable the object to obtain the vertical upward velocity; and the fourth control signal is configured to control the robotic arm to be in contact with the object and obtain the vertical downward velocity.

In all embodiments of the present disclosure, the acquisition module 820 is further configured to perform operation 535 in the embodiment in FIG. 12; and the control module 810 is further configured to perform operation 540 in the embodiment in FIG. 12.

In all embodiments of the present disclosure, the acquisition module 820 is further configured to:

acquiring motion trajectory information of the object, the motion trajectory information comprising a parabolic trajectory of the object after the object is separated from the robotic arm.

When the apparatus provided in the foregoing embodiments implements its functions, it is illustrated only with an example of division of the foregoing functional modules. In practical applications, the foregoing functions may be allocated to and completed by different functional modules according to actual requirements. That is, an internal structure of a device is divided into different functional modules, to complete all or some of the functions described above.

Specific operation implementation manners of the modules in the apparatus in the foregoing embodiments have been described in detail in the embodiments about the method. Technical effects obtained by performing operations by the modules are the same as the technical effects in the embodiments related to the method, which are not described in detail herein.

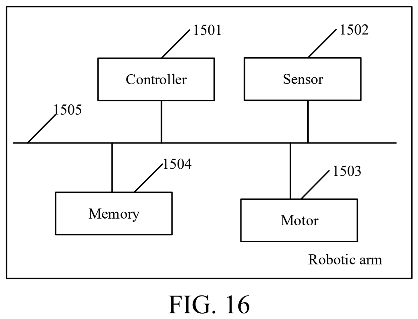

FIG. 16 is a schematic structural block diagram of a robotic arm according to an embodiment of this application. The robotic arm in this embodiment may include: one or more controllers 1501; one or more sensors 1502, one or more motor 1503, and a memory 1504. The controller 1501, the sensor 1502, the motor 1503, and the memory 1504 are connected via a bus 1505. The memory 1504 is configured to store a computer program. The computer program includes program instructions. The controller 1501 is configured to execute the program instructions stored in the memory 1504. The memory 1504 may include a volatile memory such as a random-access memory (RAM). Alternatively, the memory 1504 may include a non-volatile memory such as a flash memory or a solid-state drive (SSD). The memory 1504 may further include a combination of the foregoing types of memories.

The controller 1501 may be a central processing unit (CPU). The controller 1501 may further include a hardware chip. The hardware chip may be an application-specific integrated circuit (ASIC), a programmable logic device (PLD), or the like. The PLD may be a field-programmable gate array (FPGA), a Generic Array Logic (GAL), or the like. Alternatively, the controller 1501 may be a combination of the foregoing structures.

In the embodiments of this application, the memory 1504 is configured to store a computer program. The computer program includes program instructions. The controller 1501 is configured to execute the program instructions stored in the memory 1504, to implement the operations in the foregoing robotic arm control method.

In an embodiment, the controller 1501 is configured to call the program instructions, to perform operation 510, operation 520, and operation 530 in the embodiment in FIG. 4.

Exemplarily, the embodiments of this application further provide a robot. The robot includes the foregoing robotic arm. The robotic arm may be configured to implement the robotic arm control method provided in the foregoing method embodiments. For a structure of the robotic arm, refer to the foregoing descriptions, and for a robotic arm control method, refer to the foregoing a plurality of method embodiments. Details are not described herein again.

The embodiments of this application further provide a robotic arm, which includes a controller and a memory. The memory has at least one piece of program code stored therein, and the controller loads and executes the at least one piece of program code to implement the robotic arm control method provided in the foregoing method embodiments. The embodiments of this application further provide a computer device, which includes a processor and a memory. The memory has at least one program stored therein, and the processor loads and executes the at least one program to implement the robotic arm control method provided in the foregoing method embodiments.

The embodiments of this application further provide a computer-readable storage medium, which has a computer program stored therein. A processor executes the computer program to implement the robotic arm control method provided in the foregoing method embodiments. In an embodiment, the computer-readable storage medium includes: a read-only memory (ROM), an RAM, an SSD, an optical disc, or the like. The RAM may include a resistance RAM (ReRAM) and a dynamic RAM (DRAM). The serial numbers of the foregoing embodiments of this application are merely for description purpose but do not imply the preference among the embodiments.

Those of ordinary skill in the art may understand that all or some of the operations in the foregoing embodiments may be implemented by hardware, or may be implemented by a program instructing relevant hardware. The program may be stored in a computer-readable storage medium. The storage medium may be an ROM, a magnetic disk, an optical disc, or the like. The foregoing descriptions are merely exemplary embodiments of this application, but are not intended to limit this application. Any modification, equivalent replacement, or improvement made within the principle of this application falls within the scope of protection of this application.

The embodiments of this application further provide a chip, which includes a programmable logic circuit and/or program. The chip is configured to implement the robotic arm control method provided in the foregoing method embodiments. The embodiments of this application further provide a computer program product, which includes computer instructions. The computer instructions are stored in a computer-readable storage medium. A processor of a computer device reads the computer instructions from the computer-readable storage medium and executes the computer instructions, to cause the computer device to perform the robotic arm control method according to any one of the foregoing embodiments.

Those of ordinary skill in the art may understand that all or some of the operations in the foregoing embodiments may be implemented by hardware, or may be implemented by a program instructing relevant hardware. The program may be stored in a computer-readable storage medium. The storage medium may be an ROM, a magnetic disk, an optical disc, or the like. Those skilled in the art are aware that in one or more of the foregoing examples, the functions described in the embodiments of this application may be implemented by using hardware, software, firmware, or any combination thereof. When implemented by using software, the functions may be stored in a computer-readable medium or may be transmitted as one or more instructions or code in a computer-readable medium. The computer-readable medium includes a computer storage medium and a communication medium. The communication medium includes any medium that enables a computer program to be transmitted from one place to another. The storage medium may be any available medium accessible to a general-purpose or dedicated computer.

**Claims**

1. A robotic arm control method, executable by a controller of a robotic arm, the method comprising:

   controlling the robotic arm to throw an object placed on the robotic arm ;
   controlling the robotic arm to throw an object placed on the robotic arm;
   acquiring a first control signal;
   controlling, based on the first control signal, the robotic arm to receive the thrown object;
   acquiring a second control signal; and
   controlling, based on the second control signal, the robotic arm to cause the object to be in a force balance state on the robotic arm.

2. The method according to claim 1, wherein the robotic arm comprises a first arm;
   the controlling the robotic arm to throw the object placed on the robotic arm comprises:

   controlling the first arm to throw the object;
   the controlling, based on the first control signal, the robotic arm to receive the thrown object comprises:

   controlling, based on the first control signal, the first arm to receive the thrown object; and
   the controlling, based on the second control signal, the robotic arm to cause the object to be in a force balance state on the robotic arm comprises:
   controlling, based on the second control signal, the first arm to cause the object to be in the force balance state.

3. The method according to claim 1, wherein the robotic arm comprises a first arm and a second arm;
   the controlling the robotic arm to throw the object placed on the robotic arm comprises:

   controlling the first arm to throw the object ;
   the controlling, based on the first control signal, the robotic arm to receive the thrown object comprises:

   controlling, based on the first control signal, the second arm to receive the thrown object; and
   the controlling, based on the second control signal, the robotic arm to cause the object to be in a force balance state on the robotic arm comprises:
   controlling, based on the second control signal, the second arm to cause the object to be in the force balance state.

4. The method according to any one of claims 1 to 3, wherein the method further comprises:

   acquiring motion trajectory information of the object, the motion trajectory information comprising a parabolic trajectory of the object after the object is separated from the robotic arm.
   acquiring a first motion trajectory of the robotic arm, along which the robotic arm is control to move, according to the motion trajectory information of the object;
   acquiring a first motion sequence of the robotic arm according to the first motion trajectory, the first motion sequence comprising multiple first motion states of the robotic arm at multiple control moments during movement of the robotic arm along the first motion trajectory, each first motion state at the respective control moment indicating a velocity and a pose of the robotic arm at the respective control moment.

5. The method according to claim 4, wherein the robotic arm comprises at least one joint; the acquiring a first control signal comprises:

determining a first state of the robotic arm at each control moment according to the first motion state at the respective control moment , the first state being configured to indicate a first angle and a first angular velocity of each of the at least one joint; and
acquiring a second state of the robotic arm , the second state indicating a second angle and a second angular velocity of each of the at least one joint at the respective control moment;
determining the first control signal at the respective control moment according to the first state and the second state.

6. The method according to claim 5, wherein the determining the first control signal at the respective control moment according to the first state and the second state comprises:
determining a first control torque for each of the at least one joint at the respective control moment according to a first difference between the first angle of the respective joint and the second angle of the respective joint, and a second difference between the first angular velocity of the respective joint and the second angular velocity of the respective joint.

7. The method according to any one of claims 1 to 6, wherein the method further comprises at least one of the following:

acquiring a third state after the first arm receiving the thrown object, the third state comprising at least one of the following: (i) a first offset and a first offset velocity, and (ii) a second offset and a second offset velocity; the first offset being an offset of a center of mass of the object relative to a center of mass of a first link in a first direction, the first direction being a direction along which the first link extends, the first offset velocity being an offset velocity of the center of mass of the object relative to the center of mass of the first link in the first direction, the second offset being an offset of a center of mass of the object relative to a center of mass of a first link in a second direction, the second direction being a horizontal direction perpendicular to the first link, the second offset velocity being an offset velocity of the center of mass of the object relative to the center of mass of the first link in the second direction, the first link being a link of the robotic arm for receiving the thrown object;
acquiring a fourth state for causing the object to be in a force balance state, the fourth state comprising at least one of the following: (iii) a first pre-set offset and a first pre-set offset velocity of the center of mass of the object relative to the center of mass of the first link in the first direction, and (iv) a second pre-set offset and a second pre-set offset velocity of the center of mass of the object relative to the center of mass of the first link in the second direction.

8. The method according to claim 7, wherein the acquiring a second control signal comprises:
determining the second control signal according to a difference between the fourth state and the third state.

9. The method according to claim 8, wherein the determining the second control signal according to a difference between the fourth state and the third state comprises at least one of:

determining a second control torque, for controlling the first link rotating around a first rotation axis in the second direction, according to a third difference between the first pre-set offset and the first offset, and a fourth difference between the first pre-set offset velocity and the first offset velocity; and
determining a third control torque, for controlling the first link rotating around a second rotation axis in the first direction, according to a fifth difference between the second pre-set offset and the second offset, and a sixth difference between the second pre-set offset velocity and the second offset velocity.

10. The method according to claim 7, wherein the acquiring a third state comprises:

acquiring the third state based on a visual sensor; or
acquiring the third state based on the visual sensor and a tactile sensor.

11. The method according to claim 10, wherein the acquiring the third state based on a visual sensor comprises:

acquiring at least two images of the robotic arm with the object positioned on the robotic arm by the visual sensor;

and
determining the third state according to the at least two images.

12. The method according to claim 10, wherein the acquiring the third state based on the visual sensor and a tactile sensor comprises:

acquiring at least two images of the robotic arm with the object positioned on the robotic arm by the visual sensor; and
determining the first offset and the first offset velocity according to the at least two images;
determining a fourth position of the object on the first link at a first moment from the tactile sensor;
determining a fifth position of the object on the first link at a second moment from the tactile sensor, the first moment and the second moment are separated by a first pre-set duration;
determining the second offset velocity based on the first pre-set duration and a difference between the fourth position and the fifth position;
determining the second offset from a difference between the fifth position and a position of the center of mass of the first link.

13. The method according to any one of claims 1 to 12, wherein the method further comprises:

acquiring a fifth state of the robotic arm, the fifth state being configured to indicate a pre-set angle and a pre-set angular velocity of each of the at least one joint when the object is separated from the object; and
acquiring a sixth state of the robotic arm, the sixth state indicating a third angle and a third angular velocity of each of the at least one joint before controlling the robotic arm to throw the object;
determining a third control signal according to the fifth state and the sixth state;
the controlling the robotic arm to throw an object placed on the robotic arm comprises: controlling, based on the third control signal, the robotic arm to throw an object placed on the robotic arm.

14. The method according to claim 1, wherein the method further comprises:

acquiring a grasp control signal; and
controlling, based on the grasp control signal, an end of the robotic arm to grasp the thrown object.

15. The method according to claim 14, wherein the method further comprises:

acquiring motion trajectory information of the object, the motion trajectory information comprising a parabolic trajectory of the object after the object is separated from the robotic arm ;acquiring a second motion trajectory of the robotic arm, along which the robotic arm is control to move, according to the motion trajectory information of the object;
acquiring a second motion sequence of the robotic arm according to the second motion trajectory, the second motion sequence comprising multiple second motion states of the robotic arm at multiple control moments during movement of the robotic arm along the second motion trajectory, each second motion state at the respective control moment indicating a velocity and a pose of the robotic arm at the respective control moment;
wherein the robotic arm comprises at least one joint; the acquiring a grasp signal comprises:

determining a first state of the robotic arm at each control moment according to the second motion state at the respective control moment , the first state being configured to indicate a first angle and a first angular velocity of each of the at least one joint; and
acquiring a second state of the robotic arm , the second state indicating a second angle and a second angular velocity of each of the at least one joint at the respective control moment;
determining the grasp signal according to the first state and the second state at the respective control moment.

16. A robotic arm control apparatus, comprising:

a control module, configured to control the robotic arm to throw an object placed on the robotic arm; and
an acquisition module, configured to acquire a first control signal,
the control module being further configured to control, based on the first control signal, the robotic arm to receive the thrown object;

the acquisition module being further configured to acquire a second control signal; and
the control module being further configured to control, based on the second control signal, the robotic arm to cause the object to be in a force balance state on the robotic arm.

17. A robotic arm, comprising a memory and a controller,
the memory having at least one piece of program code stored therein, and the controller loading and executing the program code to implement the robotic arm control method according to any one of claims 1 to 15.

18. A computer-readable storage medium, having a computer program stored therein, a processor executing the computer program to implement the robotic arm control method according to any one of claims 1 to 15.

19. A chip, comprising a programmable logic circuit and/or program instructions, an electronic device having the chip installed thereon being configured to implement the robotic arm control method according to any one of claims 1 to 15.

20. A computer program product, comprising computer instructions, the computer instructions being stored in a computer-readable storage medium, and a processor reading the computer instructions from the computer-readable storage medium and executing the computer instructions to implement the robotic arm control method according to any one of claims 1 to 15.

FIG. 1

FIG. 2

Differential cable drive mechanism

FIG. 3

510

| Control a robotic arm to throw an object |
|---|

515

| Acquire a first control signal |
|---|

520

| Control, based on the first control signal, the robotic arm to receive the thrown object |
|---|

525

| Acquire a second control signal |
|---|

530

| Control, based on the second control signal, the robotic arm to cause the object to be in a force balance state |
|---|

FIG. 4

Object 402

End
401a

Robotic arm
401

FIG. 5

First arm 602 — Second arm 604
Object 612

(a)

Object 612
First arm 602 — Second arm 604

(b)

## FIG. 6

| | 510 |
|---|---|
| Control a robotic arm to throw an object | |

| | 512 |
|---|---|
| Acquire motion trajectory information of the object | |

| | 515 |
|---|---|
| Acquire a first control signal | |

| | 520 |
|---|---|
| Control, based on the first control signal, the robotic arm to receive the thrown object | |

| | 525 |
|---|---|
| Acquire a second control signal | |

| | 530 |
|---|---|
| Control, based on the second control signal, the robotic arm to cause the object to be in a force balance state | |

## FIG. 7

Extension line 652

Robotic arm 650

## FIG. 8

| |
|---|
| Control a robotic arm to throw an object |

510

↓

| |
|---|
| Acquire a first control signal |

515

↓

| |
|---|
| Control, based on the first control signal, the robotic arm to receive the thrown object |

520

↓

| |
|---|
| Acquire a third state and a fourth state |

522

↓

| |
|---|
| Acquire a second control signal |

525

↓

| |
|---|
| Control, based on the second control signal, the robotic arm to cause the object to be in a force balance state |

530

## FIG. 9

502

Acquire a fifth state of the robotic arm, and acquire a sixth state of the robotic arm

504

Determine a third control signal according to the fifth state and the sixth state

510

Control the robotic arm to throw an object

515

Acquire a first control signal

520

Control, based on the first control signal, the robotic arm to receive the thrown object

525

Acquire a second control signal

530

Control the robotic arm based on the second control signal, to cause the object to be in a force balance state

FIG. 10

FIG. 11

```
                                                                            510
┌──────────────────────────────────────────────────────────────────┐
│         Control the robotic arm to throw an object placed on the robotic arm        │
└──────────────────────────────────────────────────────────────────┘
      535                                                           515
┌────────────────────────────┐       ┌────────────────────────────┐
│   Acquire a grasp control signal    │       │    Acquire a first control signal     │
└────────────────────────────┘       └────────────────────────────┘
      540                                     520
┌────────────────────────────┐       ┌────────────────────────────┐
│ Control, based on the grasp control signal, the │       │ Control, based on the first control signal, the │
│   end of the robotic arm to grasp the thrown    │       │    robotic arm to receive the thrown object    │
│  three-dimensional object, the grasped object   │       └────────────────────────────┘
│       being in the force balance state          │             525
└────────────────────────────┘       ┌────────────────────────────┐
                                      │     Acquire a second control signal    │
                                      └────────────────────────────┘
                                            530
                                      ┌────────────────────────────┐
                                      │   Control the robotic arm, based on the second  │
                                      │  control signal, to cause the object to be in a force │
                                      │              balance state             │
                                      └────────────────────────────┘
```

FIG. 12

602

Receive first instruction information

604

Control a robotic arm to move to a preparatory pose for a throwing action

608

Control the robotic arm to adjust a posture of the bottle

No

606

Determine whether a pose of a bottle meets an action requirement

Yes

610

Control a first arm to perform the throwing action

612

Control a second arm to move to a preparatory posture for a catching action

614

Predict trajectory information of the bottle in the air

616

Control the second arm to move according to the predicted trajectory information

618

Control the second arm to close a robotic hand at an end and grasp the bottle

620

Control the second arm to catch the thrown object at any position other than the end, and re-balance the object at any position other than the end

FIG. 13

632
Receive second instruction information

634
Control a robotic arm to move to a preparatory pose for a balancing action

636
No ← Determine whether tactile information is normal

Yes

638
No ← Determine whether visual information is normal

Yes

640
Determine whether a pose of a bottle meets an action requirement

642
Control the robotic arm to adjust a pose of the bottle ← No

Yes

644
Control a first arm to perform the balancing action

FIG. 14

820
Acquisition module

810
Control module

FIG. 15

FIG. 16

## INTERNATIONAL SEARCH REPORT

| International application No. |
| --- |
| **PCT/CN2023/130371** |

| A. | CLASSIFICATION OF SUBJECT MATTER |
| --- | --- |

B25J9/16(2006.01)i

According to International Patent Classification (IPC) or to both national classification and IPC

| B. | FIELDS SEARCHED |
| --- | --- |

Minimum documentation searched (classification system followed by classification symbols)

IPC:B25J

Documentation searched other than minimum documentation to the extent that such documents are included in the fields searched

Electronic data base consulted during the international search (name of data base and, where practicable, search terms used)

CNTXT, ENTXTC, 万方, WANFANG, CNKI: 机械臂, 机械手, 抛, 抱, 物体, 对象, 瓶, 平衡: VEN, ENTXT, USTXT, EPTXT, WOTXT: manipulator, throw, hold in the arms, carry in the arms, carry in breast, object, bottle, balance.

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 116945153 A (TENCENT TECHNOLOGY (SHENZHEN) CO., LTD.) 27 October 2023 (2023-10-27)<br>claims 1-20 | 1-20 |
| A | CN 206154324 U (HANGZHOU DIANZI UNIVERSITY) 10 May 2017 (2017-05-10)<br>description, paragraphs 2-22, and figures 1-2 | 1-20 |
| A | CN 113177310 A (HARBIN INSTITUTE OF TECHNOLOGY, SHENZHEN) 27 July 2021 (2021-07-27)<br>entire document | 1-20 |
| A | CN 107890678 A (CHANGSHA ZHIWEI ELECTRONIC TECHNOLOGY CO., LTD.) 10 April 2018 (2018-04-10)<br>entire document | 1-20 |
| A | CN 114797047 A (CHEN HELING) 29 July 2022 (2022-07-29)<br>entire document | 1-20 |
| A | DE 3602178 A1 (ZURMUEHLEN EBERHARD DIPL ING) 30 July 1987 (1987-07-30)<br>entire document | 1-20 |

| ☐ Further documents are listed in the continuation of Box C. | ☑ See patent family annex. |
| --- | --- |

| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| --- | --- |

| Date of the actual completion of the international search | Date of mailing of the international search report |
| --- | --- |
| **15 January 2024** | **18 January 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/130371**

| Patent document cited in search report | | | Publication date (day/month/year) | Patent family member(s) | | | Publication date (day/month/year) |
|---|---|---|---|---|---|---|---|
| CN | 116945153 | A | 27 October 2023 | None | | | |
| CN | 206154324 | U | 10 May 2017 | None | | | |
| CN | 113177310 | A | 27 July 2021 | CN | 113177310 | B | 27 May 2022 |
| CN | 107890678 | A | 10 April 2018 | None | | | |
| CN | 114797047 | A | 29 July 2022 | WO | 2022156381 | A1 | 28 July 2022 |
| DE | 3602178 | A1 | 30 July 1987 | None | | | |

Form PCT/ISA/210 (patent family annex) (July 2022)

**REFERENCES CITED IN THE DESCRIPTION**

**Patent documents cited in the description**

- CN 202310360170X